(19) **Europäisches Patentamt / European Patent Office / Office européen des brevets**

(11) **EP 4 644 104 A1**

(12) **EUROPEAN PATENT APPLICATION**

(43) Date of publication:
**05.11.2025 Bulletin 2025/45**

(21) Application number: **25161110.9**

(22) Date of filing: **28.02.2025**

(51) International Patent Classification (IPC):
**B29D 30/06** (2006.01)       **B60C 11/03** (2006.01)
**B60C 11/12** (2006.01)

(52) Cooperative Patent Classification (CPC):
**B29D 30/0606; B29D 30/0629; B60C 11/0306;
B60C 11/1218; B60C 11/1281;** B29D 2030/0613

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.05.2024 JP 2024074514
15.11.2024 JP 2024199549**

(71) Applicant: **SUMITOMO RUBBER INDUSTRIES,
LTD.**
**Kobe-shi, Hyogo 651-0072 (JP)**

(72) Inventors:
• **OKABE, TARO**
  **Hyogo, 651-0072 (JP)**
• **ITO, SHUHEI**
  **Hyogo, 651-0072 (JP)**

(74) Representative: **Forresters IP LLP**
**Skygarden**
**Erika-Mann-Straße 11**
**80636 München (DE)**

(54) **TIRE MOLD AND PRODUCTION METHOD FOR HEAVY DUTY TIRE**

(57)     Provided is a tire mold 104 that can suppress occurrence of tread chipping and blade damage when releasing a tire having a circumferential narrow groove and a lateral sipe that can contribute to reducing rolling resistance and suppressing a decrease in wet performance due to wear. The mold 104 includes a tread ring 114. The tread ring 114 includes a pattern forming portion 136. The pattern forming portion 136 includes a narrow groove projection 144 and a lateral blade 150. The tread ring 114 includes a plurality of division surfaces traversing the pattern forming portion 136. The plurality of division surfaces divide the tread ring 114 into a plurality of segments 120. The number of the segments 120 included in the tread ring 114 is not less than 17.

EP 4 644 104 A1

## Description

BACKGROUND OF THE INVENTION

Field of the Invention

The present invention relates to a tire mold and a production method for a heavy duty tire.

Background Art

A tire comes into contact with a road surface at the tread thereof. A tread pattern formed by forming grooves on the tread influences the performance of the tire.

The tread pattern has a plurality of circumferential grooves. The plurality of circumferential grooves demarcate a plurality of land portions in the tread.

The tread becomes deformed when coming into contact with a road surface. The deformation of the tread influences the rolling resistance of the tire. In consideration of influence on the environment, reduction of rolling resistance is strongly required for tires.

By providing the circumferential grooves with narrow groove portions having a narrow groove width, the land portions can support each other when the tread comes into contact with a road surface. Accordingly, deformation of the tread is suppressed.

In order to reduce the rolling resistance of a tire, the adoption of circumferential grooves having narrow groove portions, that is, circumferential narrow grooves, has been considered (for example, Japanese Laid-Open Patent Publication No. 2017-094891).

A tire is obtained by vulcanizing a green tire in a mold. A tread ring of the mold forms the outer surface of a tread. In the case of forming circumferential narrow grooves on the tread, the tread ring is provided with projections that reflect the shapes of the circumferential narrow grooves. The projections protrude radially inward.

In the case where the mold is a segmented mold, the tread ring is composed of a plurality of segments aligned in the circumferential direction.

After the vulcanization step is completed, the tire is released from the mold. At this time, each segment is moved radially outward. Accordingly, the projections are pulled out from the tread.

The circumferential narrow grooves also influence, for example, running performance on a wet road surface (hereinafter also referred to as wet performance). Improvements to circumferential narrow grooves are being made while the influence on various performances is taken into consideration.

An object of the present invention is to provide a tire mold and a production method for a heavy duty tire that can suppress occurrence of tread chipping and blade damage when releasing a tire and can contribute to stable production of a tire having a circumferential narrow groove and a lateral sipe that can contribute to reducing rolling resistance and suppressing a decrease in wet performance due to wear.

SUMMARY OF THE INVENTION

A tire mold according to the present invention is a tire mold for forming a heavy duty tire including a tread having a tread pattern, the tread pattern includes a circumferential narrow groove and a lateral sipe connected to the circumferential narrow groove, the circumferential narrow groove includes a body portion and a wide portion located radially inward of the body portion, the body portion includes a narrow groove portion connected to the wide portion, and a pair of wall surfaces of the circumferential narrow groove come into contact with each other at the narrow groove portion when the tread comes into contact with a road surface and becomes deformed. The mold includes a tread ring for forming the tread. The tread ring includes a pattern forming portion for forming the tread pattern. The pattern forming portion includes a narrow groove projection that projects from a reference surface thereof and is for forming the circumferential narrow groove, and a lateral blade that projects from the reference surface and is for forming the lateral sipe. The narrow groove projection includes a base portion for forming the body portion and a bulge portion for forming the wide portion. The base portion includes a plate-like portion for forming the narrow groove portion. The tread ring includes a plurality of division surfaces traversing the pattern forming portion. The plurality of division surfaces divide the tread ring into a plurality of segments aligned in a circumferential direction. The number of the segments included in the tread ring is not less than 17.

A production method for a heavy duty tire according to the present invention is a production method for a heavy duty tire including a tread having a tread pattern, the tread pattern includes a circumferential narrow groove and a lateral sipe connected to the circumferential narrow groove, the circumferential narrow groove includes a body portion and a wide portion located radially inward of the body portion, the body portion includes a narrow groove portion connected to the wide portion, and a pair of wall surfaces of the circumferential narrow groove come into contact with each other at the narrow groove portion when the tread comes into contact with a road surface and becomes deformed. The production method includes a step of pressuring and heating a green tire for the tire in a mold. The mold is the above-described tire mold.

The present invention can provide a tire mold and a production method for a heavy duty tire that can suppress occurrence of tread chipping and blade damage when releasing a tire and can contribute to stable production of a tire having a circumferential narrow groove and a lateral sipe that can contribute to reducing rolling resistance and suppressing a decrease in wet performance due to wear.

BRIEF DESCRIPTION OF THE DRAWINGS

FIG. 1 is a development view showing a part of a tread of a heavy duty tire according to one embodiment of the present invention;

FIG. 2 is a development view showing a part of FIG. 1;

FIG. 3 is a cross-sectional view of FIG. 1 taken along a line III-III;

FIG. 4 is a cross-sectional view of FIG. 2 taken along a line IV-IV;

FIG. 5 is a cross-sectional view of FIG. 2 taken along a line V-V;

FIG. 6 is a cross-sectional view showing a modification of a lateral sipe;

FIG. 7 is a cross-sectional view showing a part of a vulcanizing machine in which a tire mold to be used in a production method for a heavy duty tire according to one embodiment of the present invention is incorporated;

FIG. 8 is a plan view illustrating the opening and closing of a mold;

FIG. 9 is a development view showing a part of a pattern forming portion;

FIG. 10 is a cross-sectional view of FIG. 9 taken along a line X-X;

FIG. 11 is a cross-sectional view of FIG. 9 taken along a line XI-XI;

FIG. 12 is a cross-sectional view showing a part of FIG. 7;

FIG. 13 is a plan view showing the relationship between each pitch pattern and each division surface;

FIG. 14 is a development view showing a modification of the division surface; and

FIG. 15 is a cross-sectional view showing a modification of a lateral blade.

DETAILED DESCRIPTION

Hereinafter, the present invention will be described in detail based on preferred embodiments with appropriate reference to the drawings.

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

[Findings on Which Present Invention Is Based]

As described above, by providing the circumferential narrow grooves on the tread, deformation of the tread is suppressed when the tread comes into contact with a road surface. By forming one or some of the circumferential grooves provided on the tread as circumferential narrow grooves, the rolling resistance of the tire can be reduced.

The circumferential narrow grooves are inferior to circumferential main grooves in terms of drainage performance. In the case where one or some of the circumferential grooves provided on the tread are formed as circumferential narrow grooves, there is a concern that wet performance may be decreased due to wear of the tread.

Sipes that traverse a land portion (hereinafter referred to as transverse sipes) can function as edge components. By providing transverse sipes on a land portion, the tire can suppress a decrease in wet performance.

If a wide portion having a groove width wider than the groove width of a narrow groove portion is provided on the groove bottom side of each circumferential narrow groove, the wide portion can contribute to ensuring the groove volume. When the wide portion is exposed, the tire can suppress a decrease in wet performance.

In the case of forming circumferential narrow grooves on the tread as described above, a tread ring of a mold is provided with projections that reflect the shapes of the circumferential narrow grooves.

In the case of providing a wide portion in each circumferential narrow groove, the shape of the wide portion is reflected in a distal end portion of the projection. When the vulcanization step is completed and the tire is released from the mold, the distal end portion passes through a narrow groove portion having a narrower groove width than the wide portion. Pulling out the projection is accompanied by deformation of the land portion.

For example, in the case of providing, on a land portion between two circumferential narrow grooves, transverse sipes traversing this land portion, blades for the transverse sipes are connected to the projections for the circumferential narrow grooves. This mold has a connection portion between each projection and each blade. Rubber is likely to get caught at the connection portion when releasing the tire from the mold.

In the case where the mold is a segmented mold, the projection and each blade are pulled out more obliquely with respect to the projection direction thereof at a position closer to an end portion in the circumferential direction of a segment. In the case where a connection portion is located at an end portion of the segment in the circumferential direction, stress acting on the land portion may be concentrated on a portion in contact with the connection portion, and there is a concern that, depending on the degree of the stress concentration, chipping may occur in the tread or damage such as deformation and breaking may occur in the blade.

Therefore, the present inventors have conducted a thorough study for a tire mold that can suppress occurrence of tread chipping and blade damage when releasing a tire having a circumferential narrow groove and a lateral sipe from the mold, and thus have completed the present invention described below.

[Outline of Embodiments of Present Invention]

The present invention is directed to a tire mold for forming a heavy duty tire including a tread having a tread pattern, the tread pattern including a circumferential narrow groove and a lateral sipe connected to the circumferential narrow groove, the circumferential narrow groove including a body portion and a wide portion located radially inward of the body portion, the body portion including a narrow groove portion connected to the wide portion, a pair of wall surfaces of the circumferential narrow groove coming into contact with each other at the narrow groove portion when the tread comes into contact with a road surface and becomes deformed, the mold including a tread ring for forming the tread, wherein: the tread ring includes a pattern forming portion for forming the tread pattern; the pattern forming portion includes a narrow groove projection that projects from a reference surface thereof and is for forming the circumferential narrow groove, and a lateral blade that projects from the reference surface and is for forming the lateral sipe; the narrow groove projection includes a base portion for forming the body portion and a bulge portion for forming the wide portion; the base portion includes a plate-like portion for forming the narrow groove portion; the tread ring includes a plurality of division surfaces traversing the pattern forming portion; the plurality of division surfaces divide the tread ring into a plurality of segments aligned in a circumferential direction; and the number of the segments included in the tread ring is not less than 17.

The tire mold of the present invention can suppress occurrence of tread chipping and blade damage when releasing a tire and can contribute to stable production of a tire having a circumferential narrow groove and a lateral sipe that can contribute to reducing rolling resistance and suppressing a decrease in wet performance due to wear. The mechanism by which this effect is achieved has not been clarified, but is inferred as follows.

In the tire produced using the mold, when the tread comes into contact with a road surface and becomes deformed, the pair of wall surfaces of each circumferential narrow groove come into contact with each other at the narrow groove portion. Two land portions positioned with the circumferential narrow groove located therebetween support each other, and deformation of the land portions is suppressed. The tire can reduce rolling resistance.

The lateral sipe can function as an edge component. The tire can maintain good wet performance even when the tread becomes worn.

The wide portion provided on the groove bottom side of the circumferential narrow groove can contribute to ensuring the groove volume. Even when the tread becomes worn and the lateral sipe disappears, the exposed wide portion can contribute to maintaining wet performance.

The tire can maintain good wet performance from the new state until replacement of the tire becomes necessary.

The tire can suppress a decrease in wet performance due to wear and can achieve reduction of rolling resistance.

The tread ring of the mold for the tire includes the narrow groove projection for forming the circumferential narrow groove and the lateral blade for forming the lateral sipe. In the tire, the lateral sipe is connected to the circumferential narrow groove. The tread ring has a connection portion between the narrow groove projection and the lateral blade (hereinafter referred to as projection-blade connection portion).

The tread ring has the plurality of segments aligned in the circumferential direction. The mold is a segmented mold. The deviation of the projection direction from the pulling direction of the narrow groove projection and the lateral blade is the maximum at an end portion in the circumferential direction of the segment. **In** other words, when releasing the tire from the mold, the narrow groove projection and the lateral blade are pulled out more obliquely with respect to the projection direction thereof at a position closer to the end portion in the circumferential direction of the segment. When releasing the tire from the mold, the stress acting on the land portion is concentrated on the vicinity of the projection-blade connection portion, and there is a concern that, depending on the degree of stress concentration, tread chipping or blade damage may occur.

**In** a conventional mold, the number of segments included in the tread ring, that is, the number of divisions of the tread ring, is set to 8 to 10. **In** the case where the number of divisions of the tread ring is set as in the conventional mold, an angle indicating the deviation of the projection direction from the pulling direction of the narrow groove projection and the lateral blade is the maximum at the end portion in the circumferential direction of the segment and is 18.0 to 22.5 degrees. **In** contrast, in the mold of the present invention, the number of segments included in the tread ring is not less than 17. The angle indicating the deviation of the projection direction from the pulling direction in the mold of the present invention is not greater than 10.6 degrees. When the number segments is set to be not less than 17, the mold can reduce the deviation of the projection direction from the pulling direction. The mold can reduce stress concentration occurring in the vicinity of the projection-blade connection portion due to this deviation. The mold can suppress occurrence of tread chipping and blade damage when releasing the tire.

The tire mold can suppress occurrence of tread chipping and blade damage when releasing a tire and can contribute to stable production of a tire having a circumferential narrow groove and a lateral sipe that can contribute to reducing rolling resistance and suppressing a decrease in wet performance due to wear.

Preferably, in a contour of a cross-section of the narrow groove projection taken along a plane perpendicular to a length direction of the narrow groove projection, a portion transitioning from the plate-like portion to the bulge portion is an inner transition portion, and the inner transition portion is represented by an arc having a radius R1; a minimum width W1 of the plate-like portion is narrower than a maximum width W2 of the bulge portion; and the radius R1 of the arc representing the inner transition portion is larger than half the maximum width W2 of the bulge portion. In this case, the mold can suppress occurrence of tread chipping and blade damage when releasing the tire.

Preferably, a ratio W1/W2 of the minimum width W1 of the plate-like portion to the maximum width W2 of the bulge portion is not less than 0.10 and not greater than 0.35. In this case, the mold can suppress occurrence of tread chipping and blade damage when releasing the tire. The tire produced using the mold can suppress a decrease in wet performance due to wear.

Preferably, the minimum width W1 of the plate-like portion is not greater than 2.5 mm. In this case, the tire produced using the mold can reduce rolling resistance.

Preferably, the body portion of the circumferential narrow groove includes a funnel portion located radially outward of the narrow groove portion; the base portion includes a tapered portion for forming the funnel portion; in the contour of the cross-section of the narrow groove projection, a portion transitioning from the plate-like portion to the tapered portion is an outer transition portion, and the outer transition portion is represented by an arc having a radius R2; and a ratio R1/R2 of the radius R1 of the arc representing the inner transition portion to the radius R2 of the arc representing the outer transition portion is not less than 1.5. In this case, the mold can suppress occurrence of tread chipping and blade damage when releasing the tire.

Preferably, a ratio D2/D1 of a projection length D2 of the base portion to a projection length D1 of the narrow groove projection is not less than 0.25 and not greater than 0.70. In this case, the mold can suppress occurrence of tread chipping and blade damage when releasing the tire. The tire produced using the mold can reduce rolling resistance.

Preferably, the projection length D2 of the base portion, a projection length D3 from the reference surface to a position at which the bulge portion has the maximum width W2, and a projection length D5 of the lateral blade satisfy the following formula,

$$\text{formula: } D2 \leq D5 \leq D3.$$

In this case, the mold can suppress occurrence of tread chipping and blade damage when releasing the tire. The tire produced using the mold can suppress a decrease in wet performance due to wear and can reduce rolling resistance.

Preferably, an angle of the lateral blade with respect to an axial direction is not less than -35 degrees and not greater than 35 degrees. In this case, the mold can suppress occurrence of tread chipping and blade damage when releasing the tire.

Preferably, the lateral blade extends in a zigzag manner in a projection direction and a length direction thereof. In this case, the tire produced using the mold can reduce rolling resistance.

Preferably, a thickness of the lateral blade is not less than 0.4 mm and not greater than 0.7 mm. In this case, the mold can suppress occurrence of blade damage when releasing the tire. The tire produced using the mold can reduce rolling resistance.

Preferably, a shortest distance from the lateral blade closest to the division surface to the division surface is smaller than the radius R1 of the arc representing the inner transition portion. In this case, the mold can suppress occurrence of tread chipping and blade damage when releasing the tire.

Preferably, in a development view of the pattern forming portion, contours of the division surfaces each include at least one arc. In this case, the mold can suppress occurrence of tread chipping when releasing the tire.

Preferably, a projection length D6 of the lateral blade at an end portion of the lateral blade is shorter than a projection length D7 of the lateral blade at a center portion of the lateral blade. In this case, even if a distal end of the center portion of the lateral blade is positioned near the maximum width position of the bulge portion of the narrow groove projection, since the projection length D6 of the end portion connected to the narrow groove projection is short, rubber is inhibited from getting caught at the projection-blade connection portion when pulling the narrow groove projection and the lateral blade from the tread. The mold can reduce stress concentration occurring in the vicinity of the connection portion. Even if the distal end of the center portion of the lateral blade is positioned near the maximum width position of the bulge portion of the narrow groove projection, the mold can suppress occurrence of tread chipping and blade damage when releasing the tire. When the distal end of the center portion of the lateral blade is positioned near the maximum width position of the bulge portion of the narrow groove projection, the mold can provide the tire with the lateral sipe that can function as an edge component until the final stage of wear in which replacement of the tire becomes necessary. In this case, the tire can maintain good wet performance from the new state until replacement of the tire becomes necessary.

Preferably, the projection length D2 of the base portion, the projection length D3 from the reference surface to the position at which the bulge portion has the maximum width W2, and the projection length D6 of the lateral blade at the end portion of the lateral blade satisfy the following formula,

$$\text{formula: } D2 \le D6 \le D3.$$

In this case, the mold can suppress occurrence of tread chipping and blade damage when releasing the tire. The tire produced using the mold can suppress a decrease in wet performance due to wear and can reduce rolling resistance.

The present invention is also directed to a production method for a heavy duty tire including a tread having a tread pattern, the tread pattern including a circumferential narrow groove and a lateral sipe connected to the circumferential narrow groove, the circumferential narrow groove including a body portion and a wide portion located radially inward of the body portion, the body portion including a narrow groove portion connected to the wide portion, a pair of wall surfaces of the circumferential narrow groove coming into contact with each other at the narrow groove portion when the tread comes into contact with a road surface and becomes deformed, the production method including a step of pressuring and heating a green tire for the tire in a mold, wherein the mold is the above-described tire mold. The production method can suppress occurrence of tread chipping and blade damage when releasing the tire. The tire produced using the production method can reduce rolling resistance and can suppress a decrease in wet performance due to wear.

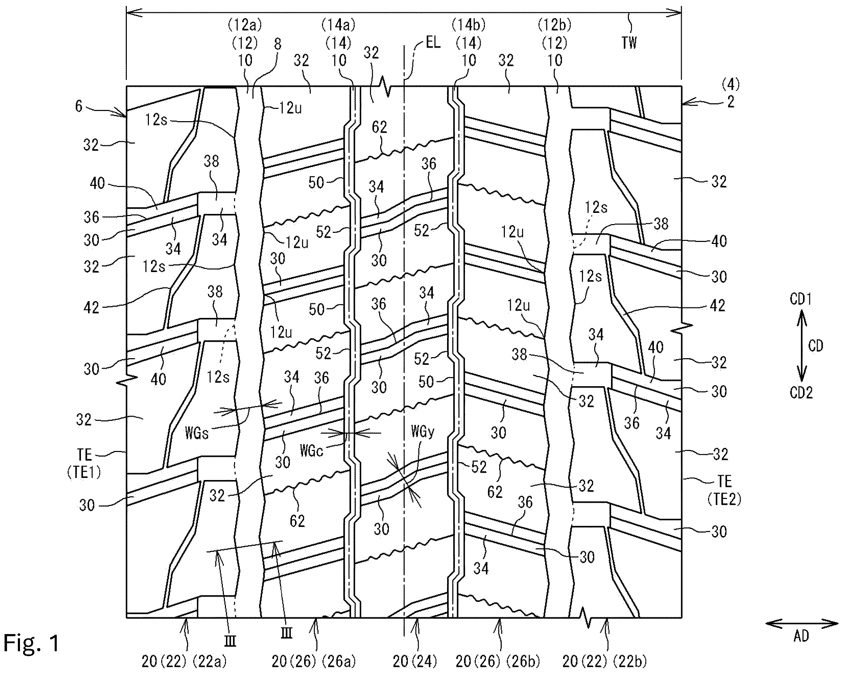

As described above, the tire mold and the production method for a heavy duty tire according to the present invention can suppress occurrence of tread chipping and blade damage when releasing a tire and can contribute to stable production of a tire having a circumferential narrow groove and a lateral sipe that can contribute to reducing rolling resistance and suppressing a decrease in wet performance due to wear. This will be described in detail below with a heavy duty tire shown in FIG. 1 as an example.

[Details of Embodiments of Present Invention]

[Tire]

FIG. 1 is a plan view illustrating a development of a part of a tread 4 of a tire 2 according to one embodiment of the present invention. The tire 2 is mounted to a vehicle such as a truck and a bus. The tire 2 is a heavy duty tire.

A direction indicated by a double-headed arrow AD is the axial direction of the tire 2. The axial direction of the tire 2 means a direction parallel to the rotation axis of the tire 2. A direction indicated by a double-headed arrow CD is the circumferential direction of the tire 2. A direction perpendicular to the surface of the drawing sheet of FIG. 1 is the radial direction of the tire 2.

An alternate long and short dash line EL extending in the circumferential direction represents the equator plane of the tire 2.

A direction from the equator plane EL toward each end of a tread surface described later is the axially outer side of the tire 2, and a direction from each end of the tread surface toward the equator plane EL is the axially inner side of the tire 2.

A direction indicated by an arrow CD1 is a first circumferential direction side of the tire 2, and a direction indicated by an arrow CD2 is a second circumferential direction side of the tire 2. The tread 4 of the tire 2 comes into contact with a road surface from the first circumferential direction side toward the second circumferential direction side. The first circumferential direction side is a leading edge side of the tire 2, and the second circumferential direction side is a trailing edge side of the tire 2.

The tire 2 includes the tread 4. The tread 4 is formed from a crosslinked rubber. The tread 4 is located on the radially outer side of the tire 2 and extends in the circumferential direction. The outer circumferential surface of the tread 4 is a tread surface 6. The tire 2 comes into contact with a road surface at the tread surface 6. The tread 4 has the tread surface 6 which comes into contact with a road surface.

The tread 4 is one of components included in the tire 2. The tire 2 includes a tread portion which comes into contact with a road surface, a pair of sidewall portions, and a pair of bead portions as portions thereof. The tread 4 is included in the tread portion.

In the present invention, the internal structure of the tire 2 is not limited to any particular internal structure. Although not described in detail, the tire 2 has a general internal structure as the internal structure of a heavy duty tire. The tread 4 is a component forming the internal structure.

Grooves 8 are formed on the tread 4. Accordingly, a tread pattern is formed. The tread 4 of the tire 2 has the tread pattern.

FIG. 1 shows the tread pattern formed on the tread 4. Using this tread pattern as an example, an outline of the tread pattern to which the present invention is applied will be described.

The tread pattern in FIG. 1 is the tread pattern of a new tire 2, that is, a tread 4 that has not been worn.

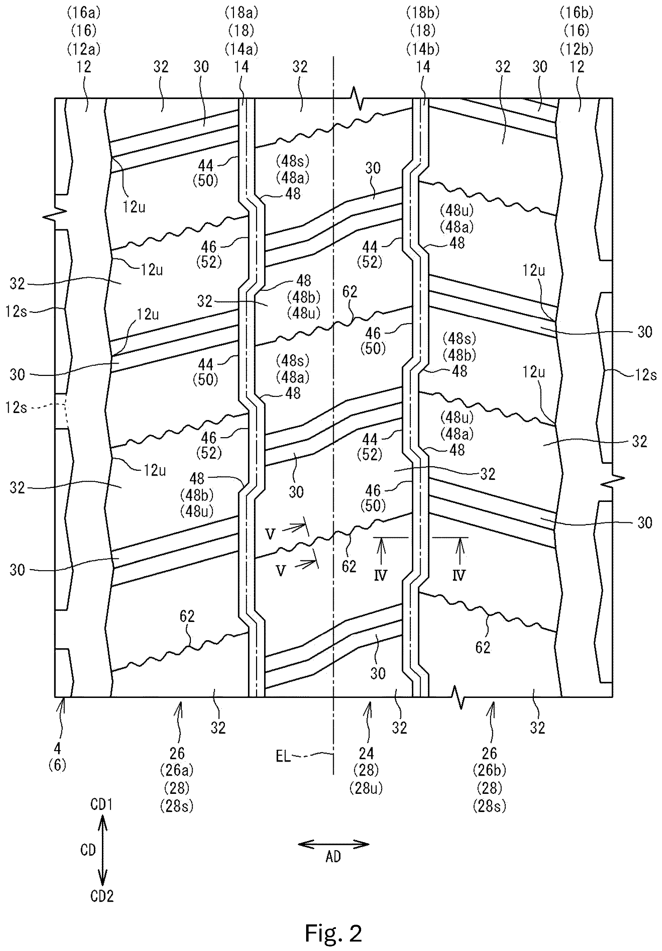

FIG. 2 shows a part of the tread pattern shown in FIG. 1.

The point of intersection of the tread surface 6 and the equator plane EL corresponds to an equator. In the case where the groove 8 is located on the equator plane EL, the equator is specified on the basis of a virtual outer surface obtained on the assumption that the groove 8 is not provided thereon.

A solid line (in other words, a position) indicated by reference character TE represents an end of the tread surface 6.

In the tire, when the end of the tread surface cannot be identified from the appearance, a position, on the outer surface of the tire, corresponding to an axially outer end of a ground-contact surface obtained when a standardized load is applied to the tire in a standardized state and the tire is brought into contact with a flat surface with a camber angle being set to 0°, is used as the end of the tread surface.

In the tread surface 6 shown in FIG. 1, one end TE of the tread surface 6 located on the left side of the equator plane EL is referred to as first end TE1. Another end TE of the tread surface 6 located on the right side of the equator plane EL is referred to as second end TE2. The end TE on the left side of the equator plane EL may be referred to as second end TE2, and the end TE on the right side of the equator plane EL may be referred to as first end TE1.

In FIG. 1, a length indicated by reference character TW is the width of the tread surface 6. The width TW of the tread surface 6 is the distance in the axial direction from the first end TE1 to the second end TE2 of the tread surface 6. The width TW of the tread surface 6 is represented as a length measured along the tread surface 6.

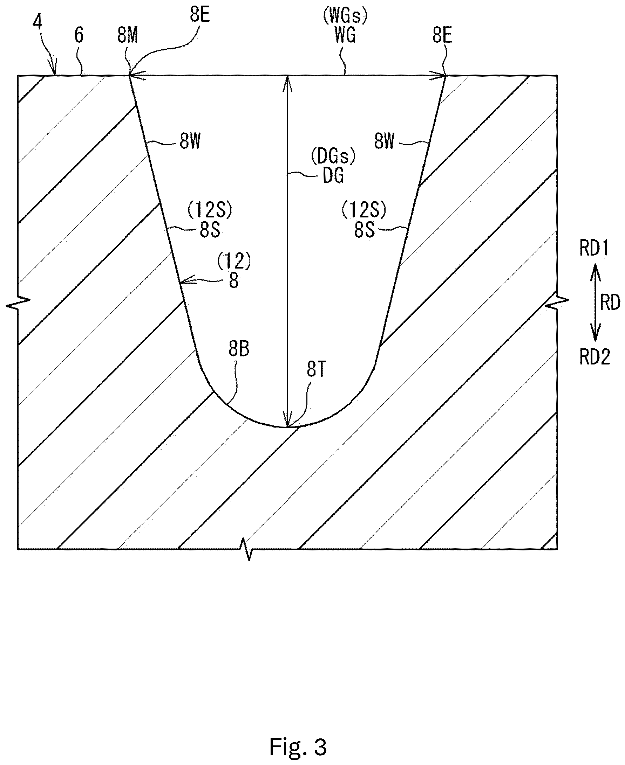

FIG. 3 is a cross-sectional view of FIG. 1 taken along a line III-III. FIG. 3 shows a cross-section of the groove 8, specifically, a shoulder circumferential groove described later. The main configuration of the groove 8 will be described with reference to FIG. 3.

In FIG. 3, a direction indicated by a double-headed arrow RD is the radial direction of the tire 2. A side indicated by an arrow RD1 is the radially outer side of the tire 2, and a side indicated by an arrow RD2 is the radially inner side of the tire 2. In the present invention, the cross-section of the groove 8 is represented as a cross-section along a plane perpendicular to the length direction of the groove 8.

The groove 8 has a pair of groove walls 8W extending between a groove opening 8M and a groove bottom 8T. In the groove 8, a portion including the groove bottom 8T is also referred to as bottom surface 8B. In this case, of each groove wall 8W, a portion other than the bottom surface 8B, that is, a portion between the bottom surface 8B and the groove opening 8M is also referred to as wall surface 8S.

The groove 8 has a pair of wall surfaces 8S including the groove opening 8M, and a bottom surface 8B including the groove bottom 8T.

The groove width of the groove 8 is represented as the shortest distance (hereinafter referred to as inter-wall surface distance) between a first wall surface 8S and a second wall surface 8S which are the pair of wall surfaces 8S. The inter-wall surface distance is measured along a plane including a pair of edges 8E forming the groove opening 8M or a plane parallel to this plane.

In FIG. 3, a length indicated by a double-headed arrow WG is the groove width of the groove 8 at the groove opening 8M. The groove width WG is measured along the plane including the pair of edges 8E forming the groove opening 8M. In the case where a portion of the groove 8 at the groove opening 8M is processed in a tapered manner, the groove width at the groove opening 8M of the groove 8 is represented on the basis of virtual edges obtained on the assumption that the portion of the groove 8 at the groove opening 8M is not processed in a tapered manner.

A length indicated by a double-headed arrow DG is the groove depth of the groove 8. The groove depth DG of the groove 8 is represented as the shortest distance from the plane including the left and right edges 8E to the groove bottom 8T of the groove 8.

The position, the groove width WG, and the groove depth DG of the groove 8 are determined as appropriate according to the specifications of the tire 2.

The groove bottom 8T is the deepest position in the cross-section of the groove 8. The distance from the plane including the left and right edges 8E forming the groove opening 8M, to the bottom surface 8B, is measured along a normal line of this plane. A position at which the distance from this plane to the bottom surface 8B is the largest is the groove bottom 8T. The direction of the normal line of the plane including the left and right edges 8E is the depth direction of the groove 8.

The bottom surface 8B shown in FIG. 3 is a curved surface. The bottom surface 8B may be composed of a flat surface. In this case, the width center of the flat surface constituting the bottom surface 8B is used as the groove bottom 8T.

In the case where a protrusion is provided on the bottom surface 8B, the groove bottom 8T is specified on the basis of a virtual bottom surface obtained on the assumption that this protrusion is not provided thereon.

The grooves 8 each having a groove width WG of less than 1.0 mm at the groove opening 8M are also referred to as sipes. The grooves 8 other than sipes are also referred to as ordinary grooves, and each have a groove width WG of not less than 1.0 mm at the groove opening 8M thereof.

A sipe may include a portion (hereinafter referred to as ordinary groove equivalent portion) having a groove width of not less than 1.0 mm, between the groove opening 8M and the groove bottom 8T thereof. In this case, the sipe becomes an ordinary groove when the tread 4 becomes worn and the ordinary groove equivalent portion is exposed.

An ordinary groove may include a portion (hereinafter referred to as sipe equivalent portion) having a groove width of less than 1.0 mm, between the groove opening 8M and the groove bottom 8T thereof. In this case, the ordinary groove becomes a sipe when the tread 4 becomes worn and the sipe equivalent portion is exposed.

An ordinary groove that has a narrow groove width and includes a pair of wall surfaces that can come into contact with each other when the tread comes into contact with a road surface and becomes deformed, is also referred to as narrow groove. An ordinary groove that has a wide groove width and includes a pair of wall surfaces that do not come into contact with each other even when the tread comes into contact with a road surface and becomes deformed, is also referred to as main groove.

A plurality of circumferential grooves 10 are formed on the tread 4 of the tire 2 so as to be aligned in the axial direction. Each circumferential groove 10 extends continuously in the circumferential direction. The tread 4 has the plurality of circumferential grooves 10 aligned in the axial direction and extending continuously in the circumferential direction.

In FIG. 3, a length indicated by a double-headed arrow DGs is the groove depth of the circumferential groove 10, specifically, a shoulder circumferential groove described later. The groove depth DGs of the shoulder circumferential groove is, for example, not less than 10 mm and not greater than 21 mm. From the viewpoint that the tire 2 can exhibit good wet performance, the groove depth DGs is preferably not less than 13 mm and not greater than 18 mm.

In the present invention, among the plurality of circumferential grooves formed on the tread, the circumferential groove located on each outermost side in the axial direction is a shoulder circumferential groove. The circumferential groove located on the equator plane is a center circumferential groove. In the case where no circumferential groove is provided on the equator plane, the circumferential groove closest to the equator plane is a center circumferential groove. In the case where a circumferential groove is located between the center circumferential groove and the shoulder circumferential groove, this circumferential groove is a middle circumferential groove.

The tread 4 of the tire 2 has four circumferential grooves 10. Among the four circumferential grooves 10, the circumferential groove 10 located on each outermost side in the axial direction is a shoulder circumferential groove 12. The circumferential groove 10 closest to the equator plane EL is a center circumferential groove 14. The tread 4 has a pair of such center circumferential grooves 14 and a pair of such shoulder circumferential grooves 12.

Of the pair of center circumferential grooves 14, the center circumferential groove 14 located on the first end TE1 side of the tread surface 6 is also referred to as first center circumferential groove 14a, and the center circumferential groove 14 located on the second end TE2 side of the tread surface 6 is also referred to as second center circumferential groove 14b.

Of the pair of shoulder circumferential grooves 12, the shoulder circumferential groove 12 located on the first end TE1 side of the tread surface 6 is also referred to as first shoulder circumferential groove 12a, and the shoulder circumferential groove 12 located on the second end TE2 side of the tread surface 6 is also referred to as second shoulder circumferential groove 12b.

Each shoulder circumferential groove 12 of the tire 2 has a groove width with which a pair of wall surfaces 12S do not come into contact with each other even when the tread 4 comes into contact with a road surface and becomes deformed. The shoulder circumferential groove 12 is the above-described main groove and is also referred to as circumferential main groove 16. As described later, each center circumferential groove 14 has a groove width with which a pair of wall surfaces come into contact with each other at a narrow groove portion when the tread 4 comes into contact with a road surface and becomes deformed. The center circumferential groove 14 is the above-described narrow groove and is also referred to as circumferential narrow groove 18.

The tread 4 of the tire 2 has the two shoulder circumferential grooves 12 positioned with the equator plane EL located therebetween, that is, the first shoulder circumferential groove 12a and the second shoulder circumferential groove 12b. The first shoulder circumferential groove 12a is also referred to as first circumferential main groove 16a, and the second shoulder circumferential groove 12b is also referred to as second circumferential main groove 16b.

The tread 4 further has the two center circumferential grooves 14 positioned with the equator plane EL located therebetween, that is, the first center circumferential groove 14a and the second center circumferential groove 14b. The first center circumferential groove 14a is also referred to as first circumferential narrow groove 18a, and the second center circumferential groove 14b is also referred to as second circumferential narrow groove 18b.

In FIG. 1, a length indicated by a double-headed arrow WGc is the groove width at the groove opening of the center circumferential groove 14. A length indicated by a double-headed arrow WGs is the groove width at the groove opening of the shoulder circumferential groove 12.

The ratio (WGc/TW) of the groove width WGc of the center circumferential groove 14 to the width TW of the tread surface 6 is not greater than 2.0%. As shown in FIG. 1, the groove width WGs of the shoulder circumferential groove 12 is wider than the groove width WGc of the center circumferential groove 14. The ratio (WGs/TW) of the groove width WGs of the shoulder circumferential groove 12 to the width TW of the tread surface 6 exceeds 2.0%. Specifically, the ratio (WGs/TW) is preferably not less than 4.0% and not greater than 10%.

Each shoulder circumferential groove 12 of the tire 2 includes outer peaks 12s closer to the end TE of the tread surface 6, and inner peaks 12u closer to the equator plane EL. The outer peaks 12s and the inner peaks 12u are arranged alternately in the circumferential direction. The shoulder circumferential groove 12 extends in the circumferential direction while alternately passing through the outer peaks 12s and the inner peaks 12u. The shoulder circumferential groove 12 extends in a zigzag manner in the circumferential direction. The shoulder circumferential groove 12 may extend in a straight manner in the circumferential direction.

Each center circumferential groove 14 of the tire 2 extends in the circumferential direction while meandering. The center circumferential groove 14 may extend in a straight manner in the circumferential direction.

Each center circumferential groove 14 of the tire 2 includes first narrow grooves 44 closer to the first end TE1 of the tread surface 6, second narrow grooves 46 closer to the second end TE2 of the tread surface 6, and connection narrow grooves 48 connecting the first narrow grooves 44 and the second narrow grooves 46.

Among the connection narrow grooves 48, the connection narrow grooves 48 connecting the first narrow grooves 44 and the second narrow grooves 46 located on the trailing edge side of the first narrow grooves 44 are also referred to as first connection narrow grooves 48a. The connection narrow grooves 48 connecting the second narrow grooves 46 and the first narrow grooves 44 located on the trailing edge side of the second narrow grooves 46 are also referred to as second connection narrow grooves 48b.

When a unit configured by connecting the first narrow groove 44, the first connection narrow groove 48a, the second narrow groove 46, and the second connection narrow groove 48b in this order is defined as a groove unit, the center circumferential groove 14 is formed by connecting a plurality of such groove units in the circumferential direction. The first narrow grooves 44 and the second narrow grooves 46 are arranged alternately in the circumferential direction.

The first narrow grooves 44 and the second narrow grooves 46 of the center circumferential groove 14 extend in a straight manner in the circumferential direction. The first narrow grooves 44 and the second narrow grooves 46 have a constant length in the circumferential direction.

The first narrow grooves 44 of the second center circumferential groove 14b have the same length as the second narrow grooves 46 of the first center circumferential groove 14a. The second narrow grooves 46 of the second center circumferential groove 14b have the same length as the first narrow grooves 44 of the first center circumferential groove 14a.

The first narrow grooves 44 of the first center circumferential groove 14a and the second narrow grooves 46 of the second center circumferential groove 14b are located on the end TE side of the tread surface 6. The second narrow grooves 46 of the first center circumferential groove 14a and the first narrow grooves 44 of the second center circumferential groove 14b are located on the equator plane EL side.

Hereinafter, for convenience of description, the first narrow grooves 44 of the first center circumferential groove 14a and the second narrow grooves 46 of the second center circumferential groove 14b are referred to as outer narrow grooves 50, and the second narrow grooves 46 of the first center circumferential groove 14a and the first narrow grooves 44 of the second center circumferential groove 14b are referred to as inner narrow grooves 52. The first connection narrow grooves 48a of the first center circumferential groove 14a and the second connection narrow grooves 48b of the second center circumferential groove 14b are referred to as outer connection grooves 48s. Each outer connection groove 48s connects the outer narrow groove 50 and the inner narrow groove 52 located on the trailing edge side of this outer narrow groove 50. The second connection narrow grooves 48b of the first center circumferential groove 14a and the first connection narrow grooves 48a of the second center circumferential groove 14b are referred to as inner connection grooves 48u. Each inner connection groove 48u connects the inner narrow groove 52 and the outer narrow groove 50 located on the trailing edge side of this inner narrow groove 52.

Each of the first center circumferential groove 14a and the second center circumferential groove 14b, that is, each of the first circumferential narrow groove 18a and the second circumferential narrow groove 18b, includes outer narrow grooves 50 closer to the end TE of the tread surface 6, inner narrow grooves 52 closer to the equator plane EL, outer connection grooves 48s each connecting the outer narrow groove 50 and the inner narrow groove 52 located on the trailing edge side of this outer narrow groove 50, and inner connection grooves 48u each connecting the inner narrow groove 52 and the outer narrow groove 50 located on the trailing edge side of this inner narrow groove 52. The outer narrow grooves 50 and the inner narrow grooves 52 are arranged alternately in the circumferential direction.

As described above, the tread 4 has the plurality of circumferential grooves 10. The plurality of circumferential grooves 10 demarcate a plurality of land portions 20 in the tread 4.

In the present invention, among the plurality of land portions formed in the tread, the land portion located on each outermost side in the axial direction is a shoulder land portion. The land portion located on the equator plane is a center land portion. In the case where no land portion is provided on the equator plane, the land portion closest to the equator plane is a center land portion. In the case where a land portion is located between the center land portion and the shoulder land portion, this land portion is a middle land portion.

The tread 4 of the tire 2 has five land portions 20. Among the five land portions 20, the land portion 20 located on each outermost side in the axial direction is a shoulder land portion 22. The land portion 20 located on the equator plane EL is a center land portion 24. The land portion 20 located between the center land portion 24 and the shoulder land portion 22 is a middle land portion 26. The tread 4 has such a center land portion 24, a pair of such middle land portions 26, and a pair of such shoulder land portions 22.

Of the pair of middle land portions 26, the middle land portion 26 located on the first end TE1 side of the tread surface 6 is also referred to as first middle land portion 26a, and the middle land portion 26 located on the second end TE2 side of the tread surface 6 is also referred to as second middle land portion 26b.

Of the pair of shoulder land portions 22, the shoulder land portion 22 located on the first end TE1 side of the tread surface 6 is also referred to as first shoulder land portion 22a, and the shoulder land portion 22 located on the second end TE2 side of the tread surface 6 is also referred to as second shoulder land portion 22b.

Although not described in detail, the width of each land portion 20 is determined as appropriate according to the specifications of the tire 2.

The center land portion 24 is located between the two center circumferential grooves 14. Each middle land portion 26 is located between the center circumferential groove 14 and the shoulder circumferential groove 12. The center land portion 24 and the middle land portions 26 are each the land portion 20 between the adjacent circumferential grooves 10.

In the present invention, among the plurality of land portions formed in the tread, the land portion between the adjacent circumferential grooves is also referred to as main land portion.

The center land portion 24 and the middle land portions 26 are main land portions 28. The five land portions 20 formed in the tread 4 include three main land portions 28 each located between the adjacent circumferential grooves 10. In the tread 4 of the tire 2, a plurality of land portions 20 are formed so as to be aligned in the axial direction, and the plurality of land portions 20 include a plurality of main land portions 28 each located between the adjacent circumferential grooves 10.

In the present invention, among the plurality of main land portions, the main land portion located on each outermost side in the axial direction is also referred to as outer main land portion. The main land portion located between the left and right outer main land portions is also referred to as inner main land portion.

In the tire 2, among the center land portion 24 and the pair of middle land portions 26 which are the main land portions 28, the main land portion 28 located on each outermost side in the axial direction is the middle land portion 26. The middle land portion 26 is an outer main land portion 28s. The center land portion 24 is an inner main land portion 28u.

Each shoulder circumferential groove 12 is located axially outward of the middle land portion 26. As described above, the shoulder circumferential groove 12 is the circumferential main groove 16. The circumferential groove 10 located axially outward of the outer main land portion 28s is the circumferential main groove 16 having a groove width wider than the groove width of the circumferential narrow groove 18.

Each shoulder land portion 22 is located axially outward of the shoulder circumferential groove 12 and includes the end TE of the tread surface 6. The shoulder land portion 22 is located further outward of the shoulder circumferential groove 12 located on the outermost side in the axial direction. The shoulder land portion 22 is not the main land portion 28.

**In** the tire 2, a land portion 20 may be further provided between the shoulder land portion 22 and the middle land portion 26. **In** this case, on both sides of the land portion 20 located between the shoulder land portion 22 and the middle land portion 26, the circumferential grooves 10 are located, and thus this land portion 20 is the main land portion 28. A plurality of land portions 20 may be further provided between the shoulder land portion 22 and the middle land portion 26.

**In** the tire 2, on each of all the land portions 20 formed in the tread 4, a plurality of lateral grooves 30 are formed so as to traverse the land portion 20. Accordingly, a plurality of blocks 32 are formed in the land portion 20 so as to be aligned in the circumferential direction. The tread pattern of the tire 2 is a block pattern.

Each lateral groove 30 formed on the center land portion 24 extends between the inner narrow groove 52 of the first center circumferential groove 14a and the inner narrow groove 52 of the second center circumferential groove 14b. Each lateral groove 30 formed on the first middle land portion 26a extends between the inner peak 12u of the first shoulder circumferential groove 12a and the outer narrow groove 50 of the first center circumferential groove 14a. Each lateral groove 30 formed on the second middle land portion 26b extends between the inner peak 12u of the second shoulder circumferential groove 12b and the outer narrow groove 50 of the second center circumferential groove 14b.

Although not described in detail, each lateral groove 30 is composed of only a lateral groove body 34 as an ordinary groove or is composed of a complex of the lateral groove body 34 and a lateral groove sipe 36 as a sipe. **In** the case where each lateral groove 30 has the lateral groove body 34 and the lateral groove sipe 36, the lateral groove sipe 36 is formed on the bottom surface of the lateral groove body 34.

The entirety of each lateral groove 30 formed on each main land portion 28 is composed of a complex of a lateral groove body 34 and a lateral groove sipe 36. This lateral groove 30 includes the lateral groove body 34 and the lateral groove sipe 36 located radially inward of the lateral groove body 34. The lateral groove body 34 and the lateral groove sipe 36 extend between the two circumferential grooves 10 positioned with the main land portion 28 located therebetween.

The groove depth of each lateral groove 30 formed on each main land portion 28 is slightly shallower than the groove depth DGs of the shoulder circumferential groove 12. Specifically, the groove depth of each lateral groove 30 is suitably set within a range of 0.85 times or more and 0.95 times or less the groove depth DGs of the shoulder circumferential groove 12.

Each lateral groove 30 formed on each shoulder land portion 22 includes an inner portion 38 connected to the shoulder circumferential groove 12 and an outer portion 40 located axially outward of the inner portion 38. The entirety of the inner portion 38 is composed of only a lateral groove body 34. Similar to each lateral groove 30 formed on each main land portion 28, the outer portion 40 is composed of a complex of a lateral groove body 34 and a lateral groove sipe 36. The lateral groove body 34 of the outer portion 40 is shallower than the lateral groove body 34 of the inner portion 38.

Each lateral groove 30 formed on each shoulder land portion 22 has a groove depth substantially equal to the groove depth of each lateral groove 30 formed on each main land portion 28. Each lateral groove 30 formed on each shoulder land portion 22 has a groove width substantially equal to a groove width WGy of each lateral groove 30 formed on each main land portion 28.

On each block 32 formed in each shoulder land portion 22, a shoulder narrow groove 42 is formed as the above-described narrow groove. The shoulder narrow groove 42 connects the inner portion 38 on the leading edge side and the outer portion 40 on the trailing edge side.

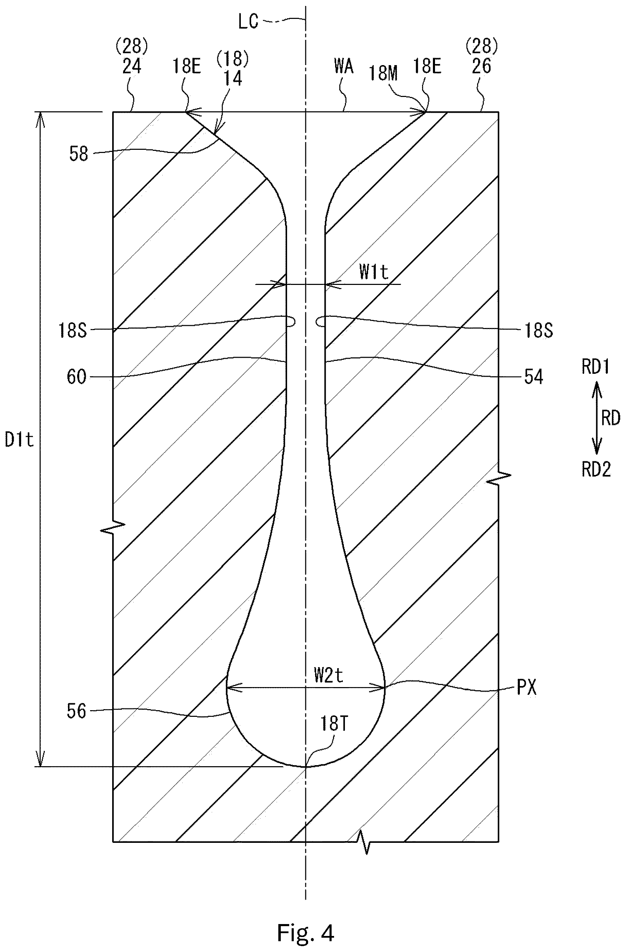

FIG. 4 shows a cross-section of the center circumferential groove 14 taken along a line IV-IV in FIG. 2. As described above, the center circumferential groove 14 is the circumferential narrow groove 18. FIG. 4 shows a cross-section of the circumferential narrow groove 18.

The circumferential narrow groove 18 includes a body portion 54 and a wide portion 56. The body portion 54 includes the groove opening 18M of the circumferential narrow groove 18. The wide portion 56 includes the groove bottom 18T of the circumferential narrow groove 18. The wide portion 56 is located radially inward of the body portion 54. When the tread 4 becomes worn and the body portion 54 disappears, the wide portion 56 is exposed.

The body portion 54 of the tire 2 includes a funnel portion 58 and a narrow groove portion 60. A portion at the groove opening 18M of the circumferential narrow groove 18 is processed in a tapered manner.

The funnel portion 58 is located radially outward of the narrow groove portion 60. The funnel portion 58 includes the groove opening 18M of the circumferential narrow groove 18. The funnel portion 58 is tapered inward from the groove opening 18M. The contour of each wall surface of the funnel portion 58 shown in FIG. 4 is represented by a straight line. This contour may be represented by a curve.

In FIG. 4, a length indicated by a double-headed arrow WA is the groove width at the groove opening 18M of the funnel portion 58. The groove width WA of the funnel portion 58 is preferably not less than 0.15 times and not greater than 0.45 times the groove width WGs of the shoulder circumferential groove 12.

The narrow groove portion 60 is located radially inward of the funnel portion 58. The narrow groove portion 60 is connected to the funnel portion 58. The narrow groove portion 60 extends straight in the depth direction of the circumferential narrow groove 18. In the cross-section shown in FIG. 4, the contour of each wall surface of the narrow groove portion 60 is represented by a straight line. In FIG. 4, a length indicated by a double-headed arrow W1t is the minimum width of the narrow groove portion 60. The narrow groove portion 60 has a groove width W1t that is uniform in the depth direction of the circumferential narrow groove 18.

In the case where the portion at the groove opening 8M of the groove 8 is processed in a tapered manner as described above, the groove width at the groove opening 8M of the groove 8 is represented on the basis of virtual edges obtained on the assumption that the portion at the groove opening 8M of the groove 8 is not processed in a tapered manner. The groove width WGc at the groove opening 18M of the circumferential narrow groove 18 of the tire 2 is represented as the groove width W1t of the narrow groove portion 60.

The groove width W1t of the narrow groove portion 60 is set such that, when the tread 4 comes into contact with a road surface and becomes deformed, the pair of wall surfaces 18S of the circumferential narrow groove 18 come into contact with each other at the narrow groove portion 60.

The wide portion 56 is located radially inward of the narrow groove portion 60. The wide portion 56 is connected to the narrow groove portion 60. In other words, the narrow groove portion 60 of the body portion 54 is connected to the wide portion 56. The wide portion 56 has a groove width wider than the minimum width W1t of the narrow groove portion 60.

In FIG. 4, a length indicated by a double-headed arrow W2t is the maximum width of the wide portion 56. A position indicated by reference character PX is a position at which the wide portion 56 has the maximum width W2t (hereinafter referred to as maximum width position PX). A portion of the circumferential narrow groove 18 except for the body portion 54, that is, the wide portion 56 of the circumferential narrow groove 18, is tapered outward from the maximum width position PX and is tapered inward from the maximum width position PX.

In FIG. 4, a length indicated by a double-headed arrow D1t is the groove depth of the circumferential narrow groove 18.

The groove depth D1t of the circumferential narrow groove 18 of the tire 2 is the same as the groove depth DGs of the shoulder circumferential groove 12, or the circumferential narrow groove 18 is shallower than the shoulder circumferential groove 12. Specifically, the ratio D1t/DGs of the groove depth D1t of the circumferential narrow groove 18 to the groove depth DGs of the shoulder circumferential groove 12 is not less than 0.75 and not greater than 1.00.

As described above, the plurality of blocks 32 are formed in each land portion 20 of the tire 2. Each main land portion 28 of the tire 2 has a plurality of blocks 32 aligned in the circumferential direction.

A lateral sipe 62 is formed on each block 32 of the main land portion 28. Each block 32 formed in the main land portion 28 (hereinafter referred to as main block 32) has a lateral sipe 62.

The lateral sipe 62 provided on each block 32 included in the outer main land portion 28s located on the first end TE1 side of the tread surface 6 (hereinafter referred to as first outer main block) extends between the vicinity of the inner peak 12u of the first circumferential main groove 16a and the inner narrow groove 52 of the first circumferential narrow groove 18a. The lateral sipe 62 provided on each block 32 included in the outer main land portion 28s located on the second end TE2 side of the tread surface 6 (hereinafter referred to as second outer main block) extends between the vicinity of the inner peak 12u of the second circumferential main groove 16b and the inner narrow groove 52 of the second circumferential narrow groove 18b.

The lateral sipe 62 provided on each block 32 included in the inner main land portion 28u (hereinafter referred to as inner main block 32) extends between the outer narrow groove 50 of the first circumferential narrow groove 18a and the outer narrow groove 50 of the second circumferential narrow groove 18b.

The lateral sipe 62 provided on each main block 32 extends between the two circumferential grooves 10 positioned with the block 32 located therebetween. The lateral sipe 62 is a transverse sipe that traverses the block 32.

One end of the lateral sipe 62 may be located within the block 32, and the lateral sipe 62 may be connected at another end thereof to a circumferential groove 10. In this case, the block 32 is connected to one circumferential groove 10.

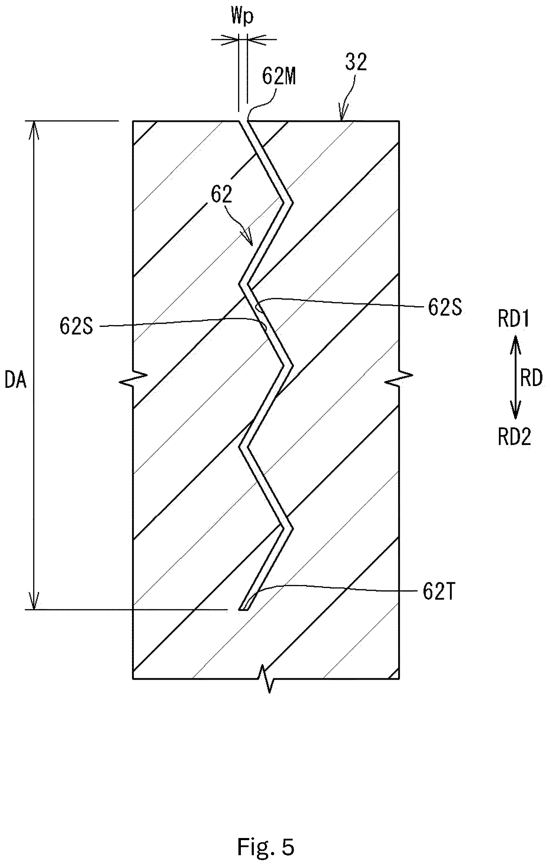

FIG. 5 shows a cross-section of the lateral sipe 62 taken along a line V-V in FIG. 2. The cross-section of the lateral sipe 62 shown in FIG. 5 is a cross-section of the lateral sipe 62 provided on the inner main block 32. As described above, the lateral sipe 62 is also provided on each block 32 of the outer main land portion 28s (hereinafter referred to as outer main block 32). The cross-sectional shape of this lateral sipe 62 is the same as the cross-sectional shape of the lateral sipe 62 provided on the inner main block 32. The description of the cross-sectional shape of the lateral sipe 62 provided on the outer main block 32 is omitted.

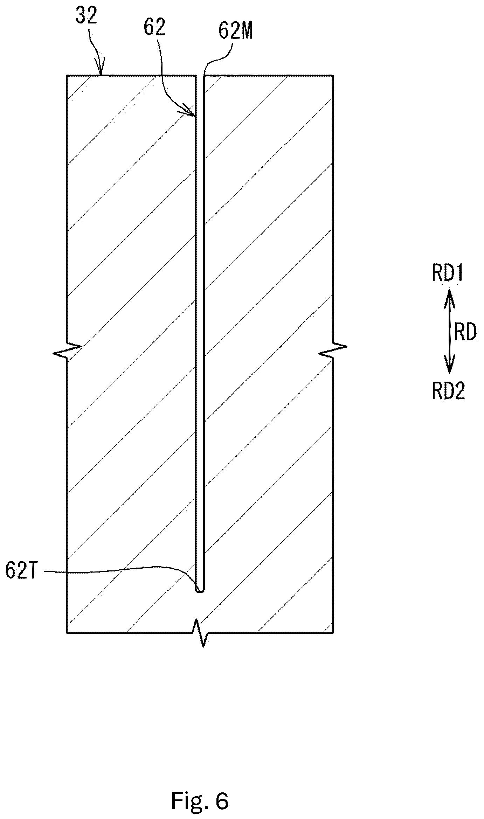

The lateral sipe 62 is the above-described sipe. A groove width Wp at a groove opening 62M of the lateral sipe 62 is less than 1.0 mm. The lateral sipe 62 extends in a zigzag manner in the length direction and the depth direction thereof. The lateral sipe 62 is a three-dimensional sipe. As shown in FIG. 6, the lateral sipe 62 may be a two-dimensional sipe spreading like a flat plate. In this case, the lateral sipe 62 extends straight in the length direction and the depth direction thereof. Although not shown, the lateral sipe 62 may include a tubular portion having a wide groove width, on a groove bottom 62T side thereof. In this case, the lateral sipe 62 includes a sipe body functioning as a sipe, and a tubular portion located radially inward of the sipe body.

In FIG. 5, a length indicated by a double-headed arrow DA is the groove depth of the lateral sipe 62.

Each lateral sipe 62 of the tire 2 is shallower than the circumferential narrow groove 18. Specifically, the ratio DA/D1t of the groove depth DA of the lateral sipe 62 to the groove depth D1t of the circumferential narrow groove 18 is not less than 0.80 and less than 1.00.

On the tread 4 of the tire 2, the circumferential narrow grooves 18 and the lateral sips 62 are formed. For example, as shown in FIG. 2, the lateral sipes 62 are connected to the circumferential narrow grooves 18. The tread 4 has a tread pattern, and the tread pattern includes the circumferential narrow grooves 18 and the lateral sipes 62 connected to the circumferential narrow grooves 18. As described above, each circumferential narrow groove 18 includes the body portion 54 and the wide portion 56 located radially inward of the body portion 54, and the body portion 54 includes the narrow groove portion 60 connected to the wide portion 56. When the tread 4 comes into contact with a road surface and becomes deformed, the pair of wall surfaces 18S of the circumferential narrow groove 18 come into contact with each other at the narrow groove portion 60. The tire 2 having such a tread pattern is produced as follows.

[Production Method for Tire]

In a production method for a tire according to one embodiment of the present invention, a green tire (uncrosslinked tire) is prepared by combining components such as a tread and sidewalls prepared as parts. The green tire is placed in a tire mold described later and is pressurized and heated in this mold. Accordingly, an uncrosslinked rubber composition included in the green tire is crosslinked to obtain a tire that is a crosslinked product of the green tire.

The production method for a tire includes a step of preparing a green tire and a step of pressurizing and heating the green tire in a mold.

In the present invention, pressurizing and heating the green tire in the mold is also referred to as vulcanization molding, and the step of pressurizing and heating the green tire in the mold is also referred to as vulcanization step. In this production method, the production conditions such as a vulcanization temperature and a vulcanization time are not particularly limited, and general conditions for producing tires are applied as the production conditions.

[Vulcanizing Machine]

In the vulcanization step, a vulcanizing machine is used. An outline of the vulcanizing machine will be described below, and for convenience of description, the configurations of the vulcanizing machine and a mold that is set in the vulcanizing machine are represented using the dimensions of the tire.

A tire mold 104 according to one embodiment of the present invention is incorporated into a vulcanizing machine 102. The vulcanizing machine 102 includes the mold 104 and a bladder 106. In the vulcanizing machine 102, the configuration other than the mold 104 is the same as the configuration of a conventional vulcanizing machine. The detailed description of the components other than the mold 104 is omitted.

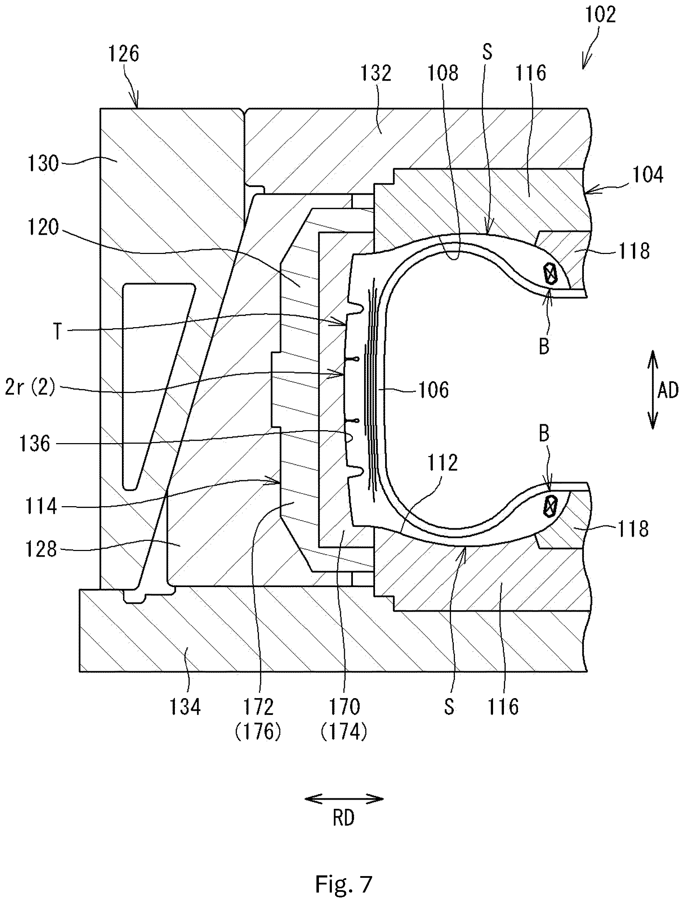

As shown in FIG. 7, a green tire 2r for the above-described tire 2 is placed in a cavity 108 formed between the mold 104 and the bladder 106. The green tire 2r is pressurized and heated in the cavity 108. Accordingly, the tire 2 having the tread pattern in FIG. 1 is obtained. The mold 104 is a mold for forming the tire 2.

The mold 104 has a cavity surface 112 on an inner surface thereof. The cavity surface 112 comes into contact with the outer surface of the green tire 2r and shapes the outer surface of the tire 2 onto the green tire 2r.

The bladder 106 is located inside the mold 104. The bladder 106 is formed from a crosslinked rubber. The interior of the bladder 106 is filled with a heating medium such as steam. Accordingly, the bladder 106 expands. The bladder 106 shown in FIG. 7 is in a state where the bladder 106 is filled with the heating medium to be expanded. The bladder 106 comes into contact with the inner surface of the green tire 2r and shapes the inner surface of the tire 2 onto the inner surface of the green tire 2r.

The above-described cavity 108 is a space surrounded by the cavity surface 112 and the bladder 106 of the mold 104.

In the production method for a tire, a rigid core (not shown) made of a metal may be used instead of the bladder 106. The rigid core has a toroidal outer surface. This outer surface is approximated to the shape of the inner surface of the tire 2 in a state where the tire 2 is filled with air and the internal pressure of the tire 2 is maintained at 5% of the standardized internal pressure.

[Mold]

The mold 104 shown in FIG. 7 is a segmented-type mold. The mold 104 includes a tread ring 114, a pair of side plates 116, and a pair of bead rings 118 as components. The above-described cavity surface 112 is formed by combining these components. The mold 104 in FIG. 7 is in a state where these components are combined, in other words, in a state of being closed.

The tread ring 114 forms a tread portion T of the tire 2. Each side plate 116 forms a sidewall portion S of the tire 2. Each bead ring 118 forms a bead portion B of the tire 2.

As described above, the tread portion T includes the tread 4. The tread ring 114 forms the tread 4.

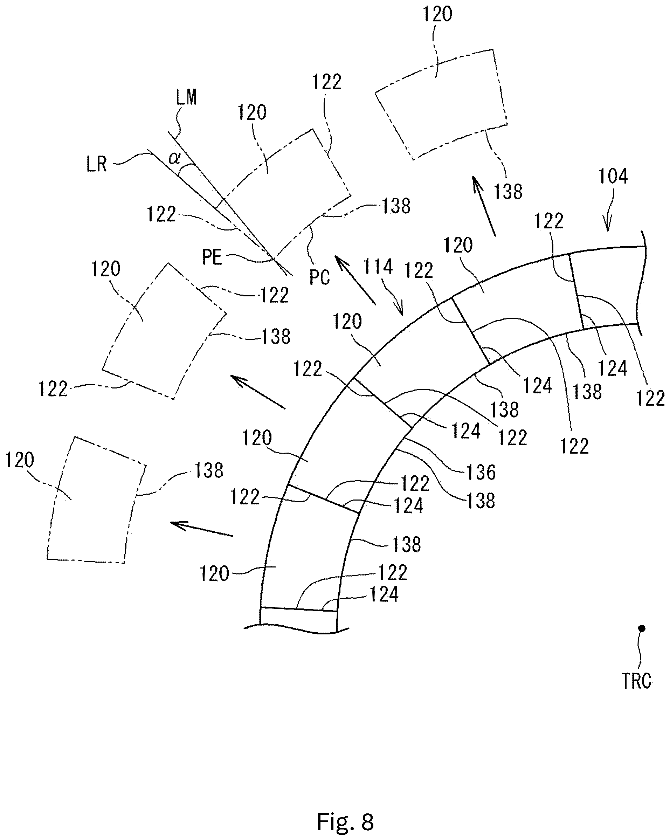

FIG. 8 shows the tread ring 114. In FIG. 8, a position indicated by reference character TRC is the center of the tread ring 114. The center TRC corresponds to the rotation axis of the tire 2.

The tread ring 114 includes a plurality of segments 120. The plurality of segments 120 are aligned in the circumferential direction. The tread ring 114 is configured by combining the plurality of segments 120. Each segment 120 has mating surfaces 122 in close contact with the segments 120 located adjacent thereto. In the tread ring 114, each portion where the segments 120 are in close contact with each other is a division surface 124. The division surface 124 is formed by the mating surfaces 122 of the adjacent segments 120 being brought into close contact with each other.

The tread ring 114 includes a pattern forming portion 136 on an inner circumferential surface thereof. The pattern forming portion 136 shapes the outer circumferential surface of the tread portion T, that is, the tread surface 6. Accordingly, the tread pattern is formed on the tread 4. The tread ring 114 includes the pattern forming portion 136 for forming the tread pattern.

As described above, each portion where the segments 120 are in close contact with each other is the division surface 124. The division surface 124 traverses the pattern forming portion 136.

The tread ring 114 has a plurality of division surfaces 124. The plurality of division surfaces 124 divide the tread ring 114 into the plurality of segments 120. Accordingly, the pattern forming portion 136 is divided into a plurality of partial forming portions 138.

The plurality of segments 120 each include the partial forming portion 138.

The vulcanizing machine 102 further includes an opening/closing frame 126 which opens and closes the mold 104.

The opening/closing frame 126 includes a plurality of sector shoes 128, an actuator 130, an upper holding plate 132, and a lower holding plate 134.

Each of the plurality of sector shoes 128 is located radially outward of the segment 120. One segment 120 is fixed to one sector shoe 128. The number of sector shoes 128 is equal to the number of segments 120.

The actuator 130 has a ring shape. The actuator 130 is located radially outward of the sector shoes 128. Each sector shoe 128 is slidably coupled to the actuator 130. Although not described in detail, the actuator 130 is movable up and down.

The upper holding plate 132 has a disc shape. The upper side plate 116 and the bead ring 118 are fixed to the upper holding plate 132. Although not described in detail, the upper holding plate 132 is movable up and down.

The lower holding plate 134 has a disc shape. The lower side plate 116 and the bead ring 118 are fixed to the lower holding plate 134. Although not shown, the lower holding plate 134 is fixed to a frame of the vulcanizing machine 102.

In the state shown in FIG. 7, after the vulcanization step is completed, the actuator 130 is raised and each sector shoe 128 is moved radially outward. Since each segment 120 is fixed to the sector shoe 128, the segment 120 moves radially outward as shown in FIG. 8, accordingly. Then, the upper holding plate 132 is raised and the upper side plate 116 and the bead ring 118 are moved upward. Then, the actuator 130 is further raised and the segments 120 are moved upward together with the sector shoes 128. Accordingly, the mold 104 is opened, and the tire 2 is taken out therefrom.

In the vulcanization step, the green tire 2r is placed in the opened mold 104. The green tire 2r is put on the lower side plate 116 and the bead ring 118. The actuator 130 is lowered and the segments 120 are moved downward together with the sector shoes 128. Then, the upper holding plate 132 is lowered and the upper side plate 116 and the bead ring 118 are moved downward. Then, the actuator 130 is further lowered and the segments 120 are moved radially inward together with the sector shoes 128. Accordingly, the mold 104 is closed, and the green tire 2r is pressurized and heated.

In the vulcanization step, the green tire 2r is pressed against the pattern forming portion 136 of the tread ring 114. Accordingly, the tread pattern is formed on the tread 4 of the green tire 2r.

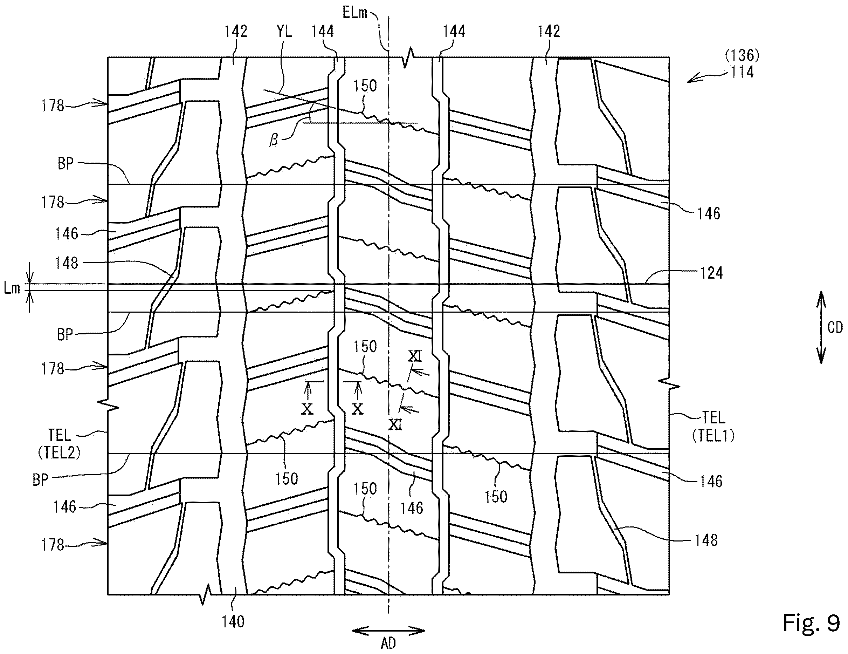

FIG. 9 is a development view showing a part of the pattern forming portion 136. The tread pattern shown in FIG. 1 is formed by the pattern forming portion 136. The pattern forming portion 136 has an uneven pattern corresponding to the tread pattern.

In FIG. 9, an alternate long and short dash line ELm corresponds to the equator plane EL of the tire 2. The alternate long and short dash line ELm is also referred to as corresponding equator plane. A position indicated by reference character TEL is a position corresponding to the end TE of the tread surface 6. The position TEL is also referred to as corresponding tread surface end.

As described above, the grooves 8 are formed on the tread 4 of the tire 2. The grooves 8 are formed by projections 140. The pattern forming portion 136 of the tread ring 114 has the projections 140 for forming the grooves 8. The tread pattern shown in FIG. 1 includes the circumferential main grooves 16, the circumferential narrow grooves 18, the lateral grooves 30, the shoulder narrow grooves 42, and the lateral sipes 62. The pattern forming portion 136 includes main groove projections 142 for forming the circumferential main grooves 16, narrow groove projections 144 for forming the circumferential narrow grooves 18, lateral groove projections 146 for forming the lateral grooves 30, narrow groove plates 148 for forming the shoulder narrow grooves 42, and lateral blades 150 for forming the lateral sipes 62.

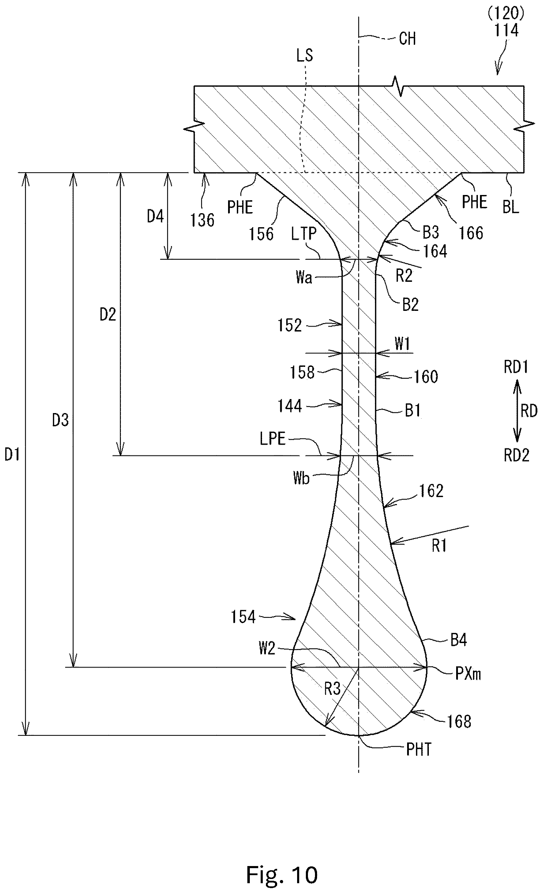

FIG. 10 is a cross-sectional view of FIG. 9 taken along a line X-X. FIG. 10 shows a cross-section of the narrow groove projection 144 taken along a plane perpendicular to the length direction of the narrow groove projection 144. The cross-sectional shape of the narrow groove projection 144 reflects the cross-sectional shape of the circumferential narrow groove 18 shown in FIG. 4.

An alternate long and short dash line CH is a width center line of the narrow groove projection 144. The cross-section of the narrow groove projection 144 shown in FIG. 10 has a shape that is symmetrical with respect to the width center line CH.

A surface indicated by reference character BL is a reference surface of the pattern forming portion 136. The reference surface BL is a surface corresponding to a virtual tread surface obtained on the assumption that there are no grooves 8 on the tread 4.

The narrow groove projection 144 projects from the reference surface BL. The direction of the width center line CH is the projection direction of the narrow groove projection 144. The projection direction of the narrow groove projection 144 corresponds to the depth direction of the circumferential narrow groove 18.

A position indicated by reference character PHT is the distal end of the narrow groove projection 144. The distal end PHT corresponds to the groove bottom 18T of the circumferential narrow groove 18. The width center line CH passes through the distal end PHT.

A dotted line LS represents an overlap portion of the narrow groove projection 144 and the reference surface BL. Each position indicated by reference character PHE is an end of the overlap portion LS. The positions PHE correspond to edges 18E forming the groove opening 18M of the circumferential narrow groove 18. The positions PHE are also referred to as edge corresponding positions.

The narrow groove projection 144 includes a base portion 152 and a bulge portion 154. The base portion 152 forms the body portion 54 of the circumferential narrow groove 18. The bulge portion 154 forms the wide portion 56 of the circumferential narrow groove 18.

The base portion 152 includes a tapered portion 156 and a plate-like portion 158. The tapered portion 156 forms the funnel portion 58 of the circumferential narrow groove 18. The plate-like portion 158 forms the narrow groove portion 60 of the circumferential narrow groove 18. In the case where the funnel portion 58 is not provided in the circumferential narrow groove 18, the base portion 152 is composed of only the plate-like portion 158.

The tapered portion 156 includes the edge corresponding positions PHE. The tapered portion 156 is tapered inward. The width of the tapered portion 156 is wider than the width of the plate-like portion 158.

The plate-like portion 158 is located radially inward of the tapered portion 156. The plate-like portion 158 is connected to the tapered portion 156. A length indicated by a double-headed arrow W1 is the minimum width of the plate-like portion 158. The plate-like portion 158 of the narrow groove projection 144 extends straight in the projection direction thereof. The plate-like portion 158 has a uniform width W1.

The bulge portion 154 is located radially inward of the base portion 152. The bulge portion 154 is connected to the plate-like portion 158 of the base portion 152. The bulge portion 154 includes the distal end PHT of the narrow groove projection 144.

A length indicated by a double-headed arrow W2 is the maximum width of the bulge portion 154. A position indicated by reference character PXm is a position at which the bulge portion 154 has the maximum width W2 (hereinafter referred to as maximum width position PXm). The bulge portion 154 is tapered from the maximum width position PXm toward the plate-like portion 158 and is tapered from the maximum width position PXm toward the distal end PHT. The maximum width W2 of the bulge portion 154 is wider than the minimum width W1 of the plate-like portion 158. The width of the bulge portion 154 is wider than the width of the plate-like portion 158.

A position indicated by a solid line LTP is the boundary between the tapered portion 156 and the plate-like portion 158. The boundary LTP is represented as a position at which the narrow groove projection 144 has a width Wa that is 1.1 times the minimum width W1 of the plate-like portion 158, in the boundary portion between the tapered portion 156 and the plate-like portion 158. In the case where the portion where the narrow groove projection 144 has a width Wa that is 1.1 times the minimum width W1 has a constant length, the radially inner end of this portion is used as the boundary LTP.

A position indicated by a solid line LPE is the boundary between the plate-like portion 158 and the bulge portion 154. The boundary LPE is represented as a position at which the narrow groove projection 144 has a width Wb that is 1.1 times the minimum width W1 of the plate-like portion 158, in the boundary portion between the plate-like portion 158 and the bulge portion 154. In the case where the portion where the narrow groove projection 144 has a width Wb that is 1.1 times the minimum width W1 has a constant length, the radially outer end of this portion is used as the boundary LTP.

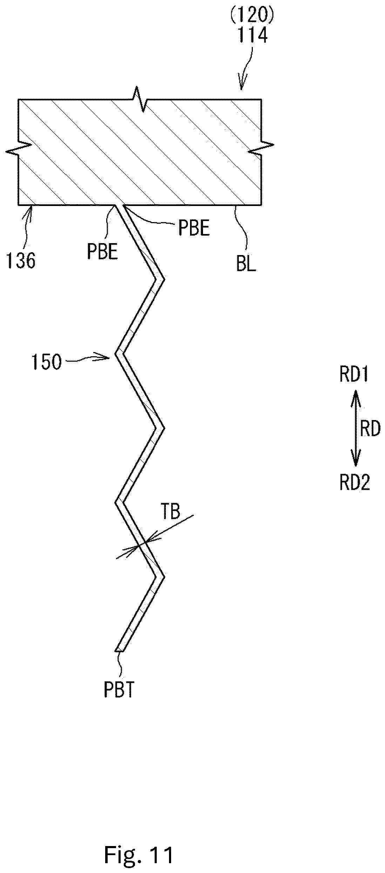

FIG. 11 is a cross-sectional view of FIG. 9 taken along a line XI-XI. FIG. 11 shows a cross-section of the lateral blade 150 taken along a plane perpendicular to the length direction of the lateral blade 150. The cross-sectional shape of the lateral blade 150 reflects the cross-sectional shape of the lateral sipe 62 shown in FIG. 5.

The lateral blade 150 projects from the reference surface BL of the pattern forming portion 136.

As described above, the lateral sipe 62 extends in a zigzag manner in the length direction and the depth direction thereof. The lateral blade 150 extends in a zigzag manner in the length direction and the projection direction thereof. The lateral blade 150 is a three-dimensional blade. In the case where the lateral sipe 62 is composed of a two-dimensional sipe as shown in FIG. 6, the lateral blade 150 is also composed of a flat plate-like blade (also referred to as two-dimensional blade). In this case, the lateral blade 150 extends straight in the length direction and the projection direction thereof.

In the tire 2 produced using the mold 104, when the tread 4 comes into contact with a road surface and becomes deformed, the pair of wall surfaces 18S of each circumferential narrow groove 18 come into contact with each other at the narrow groove portion 60. The two main land portions 28 positioned with the circumferential narrow groove 18 located therebetween support each other, and deformation of the main land portions 28 is suppressed. The tire 2 can reduce rolling resistance.

The lateral sipe 62 can function as an edge component. The tire 2 can maintain good wet performance even when the tread 4 becomes worn.

The wide portion 56 provided on the groove bottom 18T side of the circumferential narrow groove 18 can contribute to ensuring the groove volume. Even when the tread 4 becomes worn and the lateral sipe 62 disappears, the exposed wide portion 56 can contribute to maintaining wet performance.

The tire 2 can maintain good wet performance from the new state until replacement with the next tire 2 becomes necessary.

The tire 2 can suppress a decrease in wet performance due to wear and can achieve reduction of rolling resistance.

As described above, the tread ring 114 of the mold 104 for the tire 2 includes the narrow groove projections 144 for forming the circumferential narrow grooves 18, and the lateral blades 150 for forming the lateral sipes 62. In the tire 2, the lateral sipes 62 are connected to the circumferential narrow grooves 18. The tread ring 114 has projection-blade connection portions. Each projection-blade connection portion is a connection portion between the narrow groove projection 144 and the lateral blade 150.

As described above, the tread ring 114 has the plurality of segments 120 aligned in the circumferential direction. The narrow groove projections 144 and the lateral blades 150 project inward from the reference surface BL of the pattern forming portion 136 of the tread ring 114.

After the vulcanization step is completed, the mold 104 is opened in order to release the tire 2 from the mold 104. At this time, as shown in FIG. 8, the segments 120 move radially outward. Accordingly, the narrow groove projections 144 and the lateral blades 150 are pulled out of the tread 4..

In FIG. 8, the direction of a solid line LR indicates the projection direction of the narrow groove projection 144 and the lateral blade 150 at an end portion PE of the segment 120. The direction of a solid line LM indicates the pulling direction of the narrow groove projection 144 and the lateral blade 150 at the end portion PE of the segment 120. An angle $\alpha$ is an angle formed between the solid line LM and the solid line LR. The angle $\alpha$ represents the deviation of the pulling direction from the projection direction at the end portion PE of the segment 120.

At a center PC of the segment 120, the pulling direction of the narrow groove projection 144 and the lateral blade 150 coincides with the projection direction of the narrow groove projection 144 and the lateral blade 150. However, the pulling direction deviates from the projection direction as the distance to the end portion PE of the segment 120 decreases, and at the end portion PE of the segment 120, the deviation of the pulling direction from the projection direction is the maximum. That is, when releasing the tire 2 from the mold 104, the narrow groove projection 144 and the lateral blade 150 are pulled out more obliquely with respect to the projection direction thereof at a position closer to the end portion PE of the segment 120. When releasing the tire 2 from the mold 104, the stress acting on the land portion 20 is concentrated on the vicinity of the projection-blade connection portion, and there is a concern that, depending on the degree of stress concentration, tread chipping or blade damage may occur.

In a conventional mold, the number of segments included in the tread ring, that is, the number of divisions of the tread ring, is set to 8 to 10. In the case where the number of divisions of the tread ring is set as in the conventional mold, the above-described angle $\alpha$ is 18.0 to 22.5 degrees. In contrast, in the mold 104, the number of segments 120 included in the tread ring 114 is not less than 17. The angle $\alpha$ in the mold 104 is not greater than 10.6 degrees. When the number of segments 120 is set to be not less than 17, the mold 104 can reduce the deviation of the pulling direction from the projection direction of the narrow groove projection 144 and the lateral blade 150. The mold 104 can reduce stress concentration occurring in the vicinity of the projection-blade connection portion due to the deviation of the pulling direction from the projection direction. The mold 104 can suppress occurrence of tread chipping and blade damage when releasing the tire 2. From this viewpoint, the number of segments 120 included in the tread ring 114 is preferably not less than 19.

The mold 104 can suppress occurrence of tread chipping and blade damage when releasing the tire 2 having the circumferential narrow grooves 18 and the lateral sipes 62 that can contribute to reducing rolling resistance and suppressing a decrease in wet performance due to wear. The mold 104 can contribute to stable production of the tire 2 having a high quality and high performance.

As described above, the number of segments 120 included in the tread ring 114 of the mold 104 is not less than 17. From the viewpoint of ease of maintenance of the segments 120, the number of segments 120 is preferably not greater than 23.

As described above, the plate-like portion 158 of each narrow groove projection 144 extends straight. In the contour of the cross-section of the narrow groove projection 144 shown in FIG. 10, the plate-like portion 158 is represented by a straight line. The portion represented by this straight line is a first straight portion 160.

In the contour of the cross-section of the narrow groove projection 144, a portion transitioning from the plate-like portion 158 to the bulge portion 154 is an inner transition portion 162. The inner transition portion 162 is represented by a single arc having a radius R1. A position indicated by reference character B1 is the boundary between the first straight portion 160 and the inner transition portion 162. The arc representing the inner transition portion 162 is tangent to the straight line representing the first straight portion 160, at the boundary B1.

As described above, the maximum width W2 of the bulge portion 154 is wider than the minimum width W1 of the plate-like portion 158. The radius R1 of the arc representing the inner transition portion 162 is larger than half the maximum width W2 of the bulge portion 154. Accordingly, the resistance force when pulling the narrow groove projection 144 from the tread 4 is reduced. The rubber is inhibited from getting caught at the projection-blade connection portion. The mold 104 can reduce stress concentration occurring in the vicinity of the connection portion. The mold 104 can suppress occurrence of tread chipping and blade damage when releasing the tire 2. From this viewpoint, it is preferable that the maximum width W2 of the bulge portion 154 is wider than the minimum width W1 of the plate-like portion 158 and the radius R1 of the arc representing the inner transition portion 162 is larger than half the maximum width W2 of the bulge portion 154.

The ratio W1/W2 of the minimum width W1 of the plate-like portion 158 to the maximum width W2 of the bulge portion 154 is preferably not less than 0.10 and not greater than 0.35.

When the ratio W1/W2 is set to be not less than 0.10, the resistance force when pulling the narrow groove projection 144 from the tread 4 is reduced. The rubber is inhibited from getting caught at the projection-blade connection portion. The mold 104 can reduce stress concentration occurring in the vicinity of the connection portion. The mold 104 can suppress occurrence of tread chipping and blade damage when releasing the tire 2. From this viewpoint, the ratio W1/W2 is more preferably not less than 0.15.

When the ratio W1/W2 is set to be not greater than 0.35, the bulge portion 154 can form the wide portion 56 having the required groove volume. Even when the tread 4 becomes worn and the lateral sipe 62 disappears, the exposed wide portion 56 can contribute to maintaining wet performance. From this viewpoint, the ratio W1/W2 is more preferably not greater than 0.30.

The minimum width W1 of the plate-like portion 158 is preferably not greater than 2.5 mm. Accordingly, when the tread 4 comes into contact with a road surface and become deformed, the pair of wall surfaces 18S of the circumferential narrow groove 18 can effectively come into contact with each other at the narrow groove portion 60 formed by the plate-like portion 158. Deformation of the main land portion 28 is suppressed. The tire 2 can reduce rolling resistance. From this viewpoint, the minimum width W1 is preferably not greater than 2.0 mm. From the viewpoint that water existing between the tread 4 and a wet road surface is effectively drained through the circumferential narrow groove 18, the minimum width W1 is preferably not less than 1.0 mm.

In the contour of the cross-section of the narrow groove projection 144 shown in FIG. 10, a portion transitioning from the plate-like portion 158 to the tapered portion 156 is an outer transition portion 164. The outer transition portion 164 is represented by a single arc having a radius R2. A position indicated by reference character B2 is the boundary between the first straight portion 160 and the outer transition portion 164. The arc representing the outer transition portion 164 is tangent to the straight line representing the first straight portion 160, at the boundary B2.

The contour of each wall surface of the funnel portion 58 of the tire 2 produced using the mold 104 is represented by a straight line as described above. In the contour of the cross-section of the narrow groove projection 144, the tapered portion 156 forming the funnel portion 58 is represented by a straight line. The portion represented by this straight line is a second straight portion 166. The second straight portion 166 connects the edge corresponding position PHE and the outer transition portion 164. A position indicated by reference character B3 is the boundary between the outer transition portion 164 and the second straight portion 166. The arc representing the outer transition portion 164 is tangent to the straight line representing the second straight portion 166, at the boundary B3.

The ratio R1/R2 of the radius R1 of the arc representing the inner transition portion 162 to the radius R2 of the arc representing the outer transition portion 164 is preferably not less than 1.5. Accordingly, an increase in stress generated at the inner transition portion 162 when pulling the narrow groove projection 144 and the lateral blade 150 from the tread 4 is suppressed. The mold 104 can suppress occurrence of tread chipping and blade damage when releasing the tire 2. From this viewpoint, the ratio R1/R2 is more preferably not less than 2.0. From the viewpoint that the bulge portion 154 can form the wide portion 56 having the required groove volume and the wide portion 56 can effectively contribute to maintaining wet performance, the ratio R1/R2 is preferably not greater than 20.0.

As described above, the bulge portion 154 is tapered from the maximum width position PXm toward the plate-like portion 158 and is tapered from the maximum width position PXm toward the distal end PHT. A portion, of the bulge portion 154, including the distal end PHT and the maximum width position PXm (hereinafter referred to as rounded bottom portion 168) is represented by a single arc having a radius R3 in the contour of the cross-section of the narrow groove projection 144 shown in FIG. 10. The radius R3 of the arc representing the rounded bottom portion 168 is equal to half the maximum width W2 of the bulge portion 154.

In FIG. 10, a position indicated by reference character B4 is the boundary between the inner transition portion 162 and the rounded bottom portion 168. The arc representing the rounded bottom portion 168 is tangent to the arc representing the inner transition portion 162, at the boundary B4.

The ratio R1/R3 of the radius R1 of the arc representing the inner transition portion 162 to the radius R3 of the arc representing the rounded bottom portion 168 is preferably not less than 3.0 and not greater than 20.0.

When the ratio R1/R3 is set to be not less than 3.0, an increase in stress generated at the inner transition portion 162 when pulling the narrow groove projection 144 and the lateral blade 150 from the tread 4 is suppressed. The mold 104 can suppress occurrence of tread chipping and blade damage when releasing the tire 2. From this viewpoint, the ratio R1/R3 is more preferably not less than 5.0. When the ratio R1/R3 is set to be not greater than 20.0, the bulge portion 154 can form the wide portion 56 having the required groove volume, and the wide portion 56 can effectively contribute to maintaining wet performance. From this viewpoint, the ratio R1/R3 is more preferably not greater than 15.0.

In FIG. 10, a length indicated by a double-headed arrow D1 is the projection length of the narrow groove projection 144. The projection length D1 is represented as the distance from the reference surface BL to the distal end PHT. A length indicated by a double-headed arrow D2 is the projection length of the base portion 152 of the narrow groove projection 144. The projection length D2 is represented as the distance from the reference surface BL to the boundary LPE between the base portion 152 and the bulge portion 154. A length indicated by a double-headed arrow D3 is the projection length from the reference surface BL to the maximum width position PXm. A length indicated by a double-headed arrow D4 is the projection length of the tapered portion 156. The projection length D4 is represented as the distance from the reference surface BL to the boundary LTP between the tapered portion 156 and the plate-like portion 158. The projection lengths D1, D2, D3, and D4 are measured along the width center line CH of the narrow groove projection 144.

The ratio D2/D1 of the projection length D2 of the base portion 152 to the projection length D1 of the narrow groove projection 144 is preferably not less than 0.25 and not greater than 0.70.

When the ratio D2/D1 is set to be not less than 0.25, the body portion 54 having the required groove depth is formed by the base portion 152. When the tread 4 comes into contact with a road surface and becomes deformed, the pair of wall surfaces 18S of the circumferential narrow groove 18 can come into sufficient contact with each other at the narrow groove portion 60. The tire 2 produced using the mold 104 can reduce rolling resistance. From this viewpoint, the ratio D2/D1 is more preferably not less than 0.30.

When the ratio D2/D1 is set to be not greater than 0.70, the resistance force when pulling the narrow groove projection 144 from the tread 4 is reduced. The rubber is inhibited from getting caught at the projection-blade connection portion. The mold 104 can reduce stress concentration occurring in the vicinity of the connection portion. The mold 104 can suppress occurrence of tread chipping and blade damage when releasing the tire 2. From this viewpoint, the ratio D2/D1 is more preferably not greater than 0.65.

The ratio D4/D1 of the projection length D4 of the tapered portion 156 to the projection length D1 of the narrow groove projection 144 is preferably not less than 0.12 and not greater than 0.14.

When the ratio D4/D1 is set to be not less than 0.12, the funnel portion 58 formed by the tapered portion 156 can effectively suppress concentration of strain at the groove opening 18M of the circumferential narrow groove 18. Occurrence of damage such as chipping to the edge of the main land portion 28 is effectively suppressed. The tire 2 produced using the mold 104 has good durability.

When the ratio D4/D1 is set to be not greater than 0.14, the narrow groove portion 60 having the required length is formed. When the tread 4 comes into contact with a road surface and becomes deformed, the pair of wall surfaces 18S of the circumferential narrow groove 18 can come into sufficient contact with each other at the narrow groove portion 60. The tire 2 produced using the mold 104 can reduce rolling resistance.

From the viewpoint of being able to stably produce the tire 2 having low rolling resistance and good durability while suppressing occurrence of tread chipping and blade damage, it is more preferable that the ratio D2/D1 is not less than 0.25 and not greater than 0.70 and the ratio D4/D1 is not less than 0.12 and not greater than 0.14.

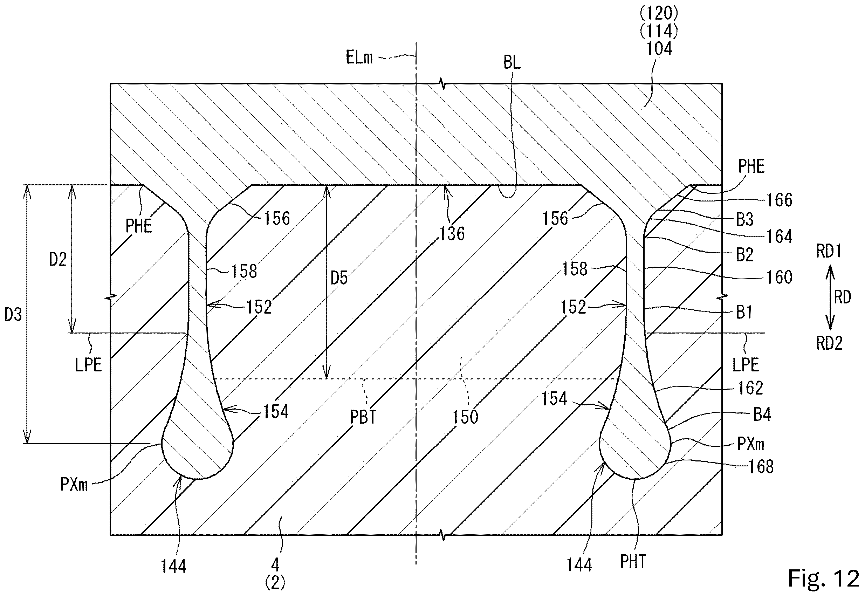

FIG. 12 is a cross-sectional view showing a part of FIG. 7. FIG. 12 shows a situation in which the narrow groove projections 144 and the lateral blades 150 of the mold 104 form the circumferential narrow grooves 18 and the lateral sipes 62 of the tire 2. In FIG. 12, a length indicated by a double-headed arrow D5 is the projection length of the lateral blade 150. The projection length D5 is represented as the shortest distance from the reference surface BL of the pattern forming portion 136 to a distal end PBT of the lateral blade 150.

The projection length D5 of the lateral blade 150 is longer than the projection length D2 of the base portion 152. Accordingly, the lateral sipe 62 formed by the lateral blade 150 can function as an edge component from the initial stage to the middle stage of wear. The tire 2 produced using the mold 104 can maintain good wet performance. The projection length D5 of the lateral blade 150 is shorter than the projection length D3 from the reference surface BL to the maximum width position PXm of the bulge portion 154 of the narrow groove projection 144. Accordingly, the influence of the lateral sipe 62 on the stiffness of the tread 4 is suppressed. The body portion 54 of each circumferential narrow groove 18 (specifically, each narrow groove portion 60) can effectively contribute to suppressing deformation of the main land portions 28. The tire 2 can reduce rolling resistance. Furthermore, the length of each projection-blade connection portion in the mold 104 is set to an appropriate length. The rubber is inhibited from getting caught at the projection-blade connection portion when pulling the narrow groove projection 144 and the lateral blade 150 from the tread 4. The mold 104 can reduce stress concentration occurring in the vicinity of the connection portion. The mold 104 can suppress occurrence of tread chipping and blade damage when releasing the tire 2.

The mold 104 can suppress occurrence of tread chipping and blade damage when releasing the tire 2 having the circumferential narrow grooves 18 and the lateral sipes 62 that can contribute to reducing rolling resistance and suppressing a decrease in wet performance due to wear. From this viewpoint, it is preferable that the projection length D2 of the base portion 152, the projection length D3 from the reference surface BL to the position PXm at which the bulge portion 154 has the maximum width W2, and the projection length D5 of the lateral blade 150 satisfy the following formula.

$$\text{Formula: } D2 \leq D5 \leq D3$$

In the case where the projection length D2 of the base portion 152, the projection length D3 from the reference surface BL to the position PXm at which the bulge portion 154 has the maximum width W2, and the projection length D5 of the lateral blade 150 satisfy the above formula, from the viewpoint that occurrence of tread chipping and blade damage when releasing the tire 2 from the mold 104 is suppressed and the tire 2 produced using the mold 104 can suppress a decrease in wet performance due to wear and can achieve reduction of rolling resistance, it is further preferable that the ratio D2/D5 of the projection length D2 to the projection length D5 is not less than 0.40 and not greater than 0.90 and the ratio D3/D5 of the projection length D3 to the projection length D5 is not less than 1.05 and not greater than 2.00.

In FIG. 9, a solid line YL indicates the length direction of the lateral blade 150. An angle β is an angle of the length direction of the lateral blade 150 with respect to the axial direction. In the present invention, the angle β is an angle of the lateral blade 150 with respect to the axial direction.

The angle β is represented in the range from -90 degrees to 90 degrees. The case where the angle β is 0 degrees is the case where the length direction of the lateral blade 150 coincides with the axial direction. The length direction of the lateral blade 150 with respect to the axial direction in the case where the angle β is represented by a negative number is opposite to the length direction of the lateral blade 150 with respect to the axial direction in the case where the angle β is represented by a positive number.

In the mold 104, the angle β is preferably not less than -35 degrees and not greater than 35 degrees. In this case, stress concentration occurring in the vicinity of the projection-blade connection portion is suppressed when pulling the narrow groove projection 144 and the lateral blade 150 from the tread 4. The mold 104 can suppress occurrence of tread chipping and blade damage when releasing the tire 2. From this viewpoint, the angle β is more preferably not less than -25 degrees and not greater than 25 degrees.

As described above, the lateral blade 150 extends in a zigzag manner in the length direction and the projection direction thereof. Accordingly, a pair of wall surfaces 62W of the lateral sipe 62 formed by the lateral blade 150 effectively engage each other. Deformation of the main land portion 28 is suppressed. The tire 2 can reduce rolling resistance. From this viewpoint, it is preferable that the lateral blade 150 extends in a zigzag manner in the length direction and the projection direction thereof.

In FIG. 11, a length indicated by a double-headed arrow TB is the thickness of the lateral blade 150.

From the viewpoint of suppressing occurrence of breaking and bending of the lateral blade 150, the thickness TB of the lateral blade 150 is preferably not less than 0.4 mm. From the viewpoint that the lateral sipe 62 formed by the lateral blade 150 can effectively contribute to suppressing deformation of the main land portion 28, the thickness TB of the lateral blade 150 is preferably not greater than 0.7 mm.

As shown in FIG. 7, each segment 120 included in the tread ring 114 includes a body 170 and a holder 172 holding the body 170.

As described above, the tread ring 114 is configured by combining the plurality of segments 120. Accordingly, a body ring 174 composed of a plurality of bodies 170 aligned in the circumferential direction and a holder ring 176 composed of a plurality of holders 172 aligned in the circumferential direction, are configured. The body ring 174 has the above-described pattern forming portion 136.

As shown in FIG. 9, the uneven pattern of the pattern forming portion 136 is divided into a plurality of pitch patterns 178 aligned in the circumferential direction. In FIG. 9, a solid line BP extending in the axial direction is the boundary between two adjacent pitch patterns 178.

The uneven pattern of the pattern forming portion 136 for shaping the tread pattern is formed by combining the plurality of pitch patterns 178. In the present invention, the pitch pattern means a unit pattern repeated in the circumferential direction.

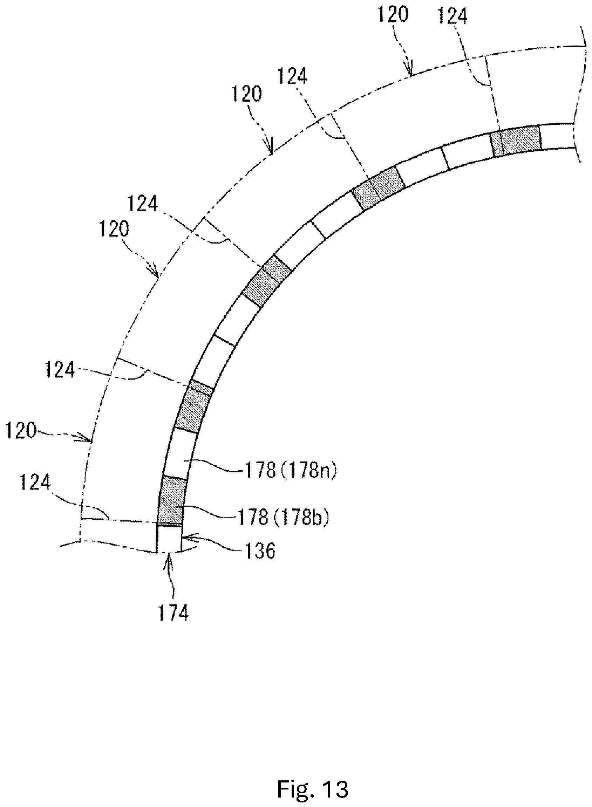

As described above, the body ring 174 has the pattern forming portion 136. The body ring 174 has the plurality of pitch patterns 178 aligned in the circumferential direction. As shown in FIG. 13, the plurality of pitch patterns 178 included in the body ring 174 include pitch patterns 178 which the division surfaces 124 of the tread ring 114 intersect (hereinafter referred to as boundary pitch patterns 178b), and pitch patterns 178 which no division surface 124 intersects (hereinafter referred to as normal pitch patterns 178n).

Each division surface 124 traverses the boundary pitch pattern 178b which is a part of the pattern forming portion 136. As shown in FIG. 9, each division surface 124 of the mold 104 is represented by a straight line extending in the axial direction.

When the lateral blade 150 intersects the division surface 124, the lateral blade 150 is composed of two small blade pieces. In this case, the stiffness of the entire lateral blade 150 is decreased. Even if the number of segments 120 included in the tread ring 114 is set to be not less than 17 and the mold 104 is configured such that a distinct force is less likely to act on the lateral blade 150 when releasing the tire 2 from the mold 104, damage such as breaking or bending may occur in the lateral blade 150. Therefore, the division surface 124 is located away from the lateral blade 150 such that the division surface 124 does not intersect the lateral blade 150.

In FIG. 9, a length indicated by a double-headed arrow Lm is the shortest distance in the circumferential direction from the lateral blade 150 closest to the division surface 124, to the division surface 124. The shortest distance Lm in the circumferential direction is obtained by measuring the distance in the circumferential direction from the distal end PBT of the lateral blade 150 to the division surface 124.

The radius R1 of the arc representing the inner transition portion 162 of the narrow groove projection 144 is larger than the shortest distance Lm in the circumferential direction. Accordingly, the resistance force when pulling the narrow groove projection 144 from the tread 4 is reduced. The rubber is inhibited from getting caught at the projection-blade connection portion. The mold 104 can reduce stress concentration occurring in the vicinity of the connection portion. The mold 104 can suppress occurrence of tread chipping and blade damage when releasing the tire 2. From this viewpoint, it is preferable that the radius R1 of the arc representing the inner transition portion 162 is larger than the shortest distance Lm in the circumferential direction. Specifically, the ratio R1/Lm of the radius R1 of the arc representing the inner transition portion 162 to the shortest distance Lm in the circumferential direction is preferably not less than 1.1 and more preferably not less than 1.5. From the viewpoint that the bulge portion 154 can form the wide portion 56 having the required groove volume and the wide portion 56 can effectively contribute to maintaining wet performance, the ratio R1/Lm is preferably not greater than 8.0 and more preferably not greater than 7.0.

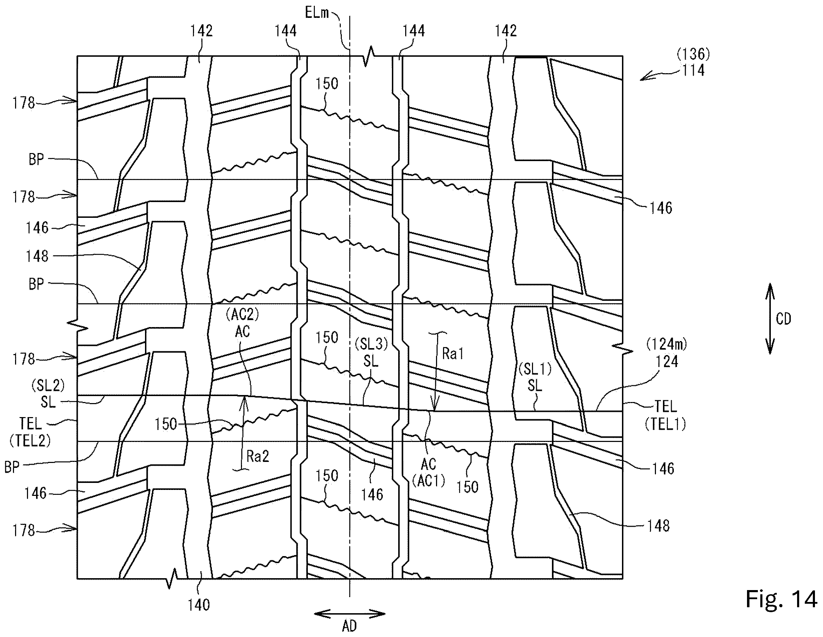

FIG. 14 is a development view showing a modification of the division surface 124 (hereinafter referred to as division surface 124m). The uneven pattern of a pattern forming portion 136 shown in FIG. 14 is the same as the uneven pattern of the pattern forming portion 136 shown in FIG. 9.

The contour of the division surface 124m shown in FIG. 14 includes three straight lines SL and two arcs AC. The three straight lines SL are aligned in the axial direction.

The three straight lines SL are a first straight line SL1 including a first corresponding tread surface end TEL1, a second straight line SL2 including a second corresponding tread surface end TEL2, and a third straight line SL3 located between the first straight line SL1 and the second straight line SL2. The first straight line SL1 and the second straight line SL2 extend in the axial direction. The third straight line SL3 is inclined with respect to the axial direction.

Each of the two arcs AC connects two adjacent straight lines SL. The two arcs AC are a first arc AC1 connecting the first straight line SL1 and the third straight line SL3, and a second arc AC2 connecting the second straight line SL2 and the third straight line SL3. An arrow Ra1 represents the radius of the first arc AC1, and an arrow Ra2 represents the radius of the second arc AC2.

As described above, the deviation of the pulling direction from the projection direction of the narrow groove projection 144 and the lateral blade 150 is the maximum at the end portion PE of the segment 120. Depending on the placement of the lateral blade 150, the division surface 124 may be close to the lateral blade 150. In this case, when releasing the tire 2 from the mold 104, stress may be concentrated on the lateral blade 150 close to the division surface 124, and depending on the degree of the stress concentration, tread chipping or blade damage may occur.

However, when the contour of the division surface 124 includes at least one arc, the division surface 124 can be located away from the lateral blade 150, like the division surface 124m shown in FIG. 14. Accordingly, stress concentration on the lateral blade 150 close to the division surface 124 is suppressed. The mold 104 can suppress occurrence of tread chipping or blade damage when releasing the tire 2. From this viewpoint, it is preferable that the contour of the division surface 124 includes at least one arc. In this case, it is more preferable that the radius of the arc is not less than 5 mm.

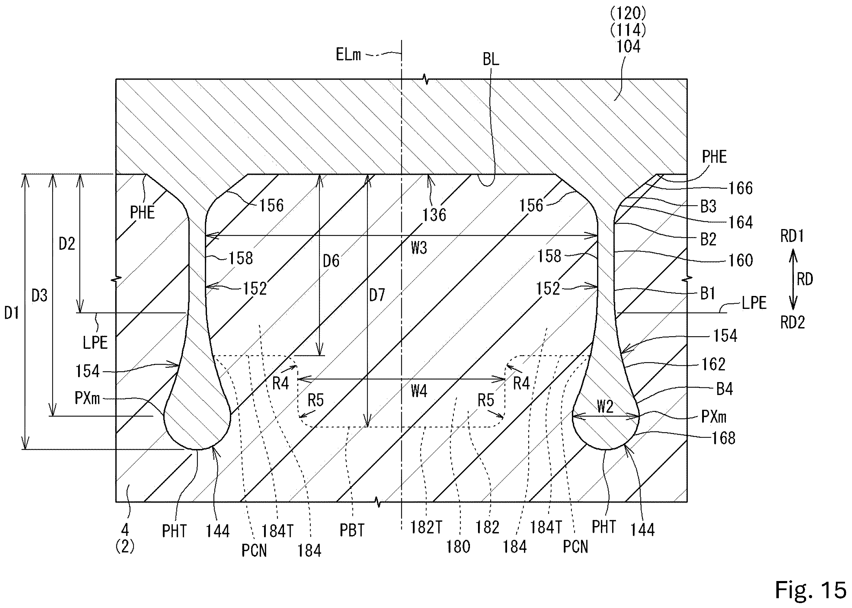

FIG. 15 shows a situation in which the tire 2 is formed with each lateral blade 150 of the mold 104 replaced with a lateral blade 180, which is a modification of the lateral blade 150. The lateral blade 180 forms the lateral sipe 62.

Similar to the lateral blade 150, the lateral blade 180 is located between the two narrow groove projections 144. The lateral blade 180 extends between the two narrow groove projections 144.

The lateral blade 180 includes a center portion 182 and a pair of end portions 184. The center portion 182 is located at the center in the length direction of the lateral blade 180. Each of the pair of end portions 184 is located outward of the center portion 182 in the length direction of the lateral blade 180. The end portion 184 is located between the center portion 182 and the narrow groove projection 144. The lateral blade 180 is connected to the narrow groove projection 144 at the end portion 184.

Although not shown, the lateral blade 180 extends in the length direction and the projection direction thereof. The lateral blade 180 is a two-dimensional blade. The lateral blade 180 may be configured to extend in a zigzag manner in the length direction and the projection direction thereof. In other words, the lateral blade 180 may be a three-dimensional blade.

The projection length of each end portion 184 is represented as a length, from the reference surface BL to a bottom 184T of the end portion 184, measured along a normal line of the reference surface BL of the pattern forming portion 136.

In FIG. 15, each position indicated by reference character PCN is a connection portion between the narrow groove projection 144 and the lateral blade 180, that is, a radially inner end of a projection-blade connection portion. The radially inner end PCN is included in the bottom 184T of the end portion 184. The radially inner end PCN is an end, on the narrow groove projection 144 side, of the bottom 184T of the end portion 184.

A length indicated by a double-headed arrow D6 is the distance from the reference surface BL of the pattern forming portion 136 to the radially inner end PCN of the projection-blade connection portion. The projection length D6 is the projection length of the end portion 184 at the projection-blade connection portion. In the present invention, the projection length of each end portion 184 of the lateral blade 180 is represented as the projection length D6 of the end portion 184 at the projection-blade connection portion.

As shown in FIG. 15, each end portion 184 has a projection length D6 that is uniform in the length direction thereof. Each end portion 184 may be configured such that the projection length of the end portion 184 gradually increases from the projection-blade connection portion toward the center portion 182.

The projection length of the center portion 182 is represented as a length, from the reference surface BL to a distal end 182T of the center portion 182, measured along a normal line of the reference surface BL of the pattern forming portion 136.

A length indicated by a double-headed arrow D7 is the projection length of the center portion 182 of the lateral blade 180. In the present invention, the projection length D7 of the center portion 182 is represented as the longest distance from the reference surface BL of the pattern forming portion 136 to the distal end 182T of the center portion 182. The projection length D7 is also referred to as maximum projection length.

As shown in FIG. 15, the center portion 182 has a projection length D7 that is uniform in the length direction thereof. The center portion 182 may be configured such that the projection length of the center portion 182 gradually decreases from the position at which the center portion 182 has the maximum projection length D7, toward each end portion 184.

As shown in FIG. 15, the projection length D6 of the lateral blade 180 at each end portion 184 of the lateral blade 180 is shorter than the projection length D7 of the lateral blade 180 at the center portion 182 of the lateral blade 180.

Accordingly, even if the distal end 182T of the center portion 182 of the lateral blade 180 is positioned near the maximum width position PXm of the bulge portion 154 of the narrow groove projection 144, since the projection length D6 of each end portion 184 connected to the narrow groove projection 144 is short, the rubber is inhibited from getting caught at the projection-blade connection portion when pulling the narrow groove projection 144 and the lateral blade 180 from the tread 4. The mold 104 can reduce stress concentration occurring in the vicinity of the connection portion. Even if the distal end 182T of the center portion 182 of the lateral blade 180 is positioned near the maximum width position PXm of the bulge portion 154 of the narrow groove projection 144, the mold 104 can suppress occurrence of tread chipping and blade damage when releasing the tire 2. When the distal end 182T of the center portion 182 of the lateral blade 180 is positioned near the maximum width position PXm of the bulge portion 154 of the narrow groove projection 144, the mold 104 can provide the tire 2 with the lateral sipes 62 that can function as edge components until the final stage of wear in which replacement of the tire 2 becomes necessary. In this case, the tire 2 can maintain good wet performance from the new state until replacement of the tire 2 becomes necessary. From this viewpoint, it is preferable that the projection length D6 of the lateral blade 180 at each end portion 184 of the lateral blade 180 is shorter than the projection length D7 of the lateral blade 180 at the center portion 182 of the lateral blade 180.

The projection length D6 of each end portion 184 of the lateral blade 180 is longer than the projection length D2 of the base portion 152. Accordingly, an end portion of the lateral sipe 62 formed by each end portion 184 of the lateral blade 150 can function as an edge component from the initial stage to the middle stage of wear. The tire 2 produced using the mold 104 can maintain good wet performance.

The projection length D6 of each end portion 184 is shorter than the projection length D3 from the reference surface BL to the maximum width position PXm of the bulge portion 154 of the narrow groove projection 144. Accordingly, the influence of the end portion of the lateral sipe 62 on the stiffness of the tread 4 is suppressed. The body portion 54 (specifically, the narrow groove portion 60) of the circumferential narrow groove 18 can effectively contribute to suppressing deformation of the main land portion 28. The tire 2 can reduce rolling resistance. Moreover, the length of each projection-blade connection portion in the mold 104 is set to an appropriate length. The rubber is inhibited from getting caught at the projection-blade connection portion when pulling the narrow groove projection 144 and the lateral blade 180 from the tread 4. The mold 104 can reduce stress concentration occurring in the vicinity of the connection portion. The mold 104 can suppress occurrence of tread chipping and blade damage when releasing the tire 2.

The mold 104 can suppress occurrence of tread chipping and blade damage when releasing the tire 2 having the circumferential narrow grooves 18 and the lateral sipes 62 that can contribute to reducing rolling resistance and suppressing a decrease in wet performance due to wear. From this viewpoint, it is preferable that the projection length D2 of the base portion 152, the projection length D3 from the reference surface BL to the position PXm at which the bulge portion 154 has the maximum width W2, and the projection length D6 of the lateral blade 180 at each end portion 184 of the lateral blade 180 satisfy the following formula.

$$\text{Formula: } D2 \leq D6 \leq D3$$

In the case where the projection length D2 of the base portion 152, the projection length D3 from the reference surface BL to the position PXm at which the bulge portion 154 has the maximum width W2, and the projection length D6 of each end portion 184 of the lateral blade 180 satisfy the above formula, from the viewpoint that occurrence of tread chipping and blade damage when releasing the tire 2 from the mold 104 is suppressed and the tire 2 produced using the mold 104 can suppress a decrease in wet performance due to wear and can achieve reduction of rolling resistance, it is further preferable that the ratio D2/D6 of the projection length D2 to the projection length D6 is not less than 0.40 and not greater than 0.90 and the ratio D3/D5 of the projection length D3 to the projection length D6 is not less than 1.05 and not greater than 2.00.

As described above, the projection length D6 of the lateral blade 180 at each end portion 184 of the lateral blade 180 is shorter than the projection length D7 of the lateral blade 180 at the center portion 182 of the lateral blade 180. Specifically, the difference (D7 - D6) between the projection length D7 of the center portion 182 of the lateral blade 180 and the projection length D6 of each end portion 184 of the lateral blade 180 is preferably not less than 2.0 mm and not greater than 8.5 mm.

When the difference (D7 - D6) is set to be not less than 2.0 mm, the lateral sipe 62 formed by only the center portion 182 and exposed after the lateral sipe 62 formed by the center portion 182 and the end portions 184 disappears, can function as an edge component until the final stage of wear in which replacement of the tire 2 becomes necessary. The tire 2 can maintain good wet performance from the new state until replacement of the tire 2 becomes necessary. From this viewpoint, the difference (D7 - D6) is more preferably not less than 3.0 mm.

When the difference (D7 - D6) is set to be not greater than 8.5 mm, the stress acting on the lateral blade 180 when pulling the narrow groove projection 144 and the lateral blade 180 from the tread 4 is reduced. The mold 104 can suppress occurrence of tread chipping and blade damage when releasing the tire 2. From this viewpoint, the difference (D7 - D6) is more preferably not greater than 7.5 mm.

As shown in FIG. 15, the projection length D7 of the center portion 182 of the lateral blade 180 is shorter than the projection length D1 of the narrow groove projection 144. Specifically, the difference (D1 - D7) between the projection length D1 of the narrow groove projection 144 and the projection length D7 of the center portion 182 of the lateral blade 180 is preferably not less than 1.0 mm and not greater than 6.5 mm.

When the difference (D1 - D7) is set to be not less than 1.0 mm, the stress acting on the lateral blade 180 when pulling the narrow groove projection 144 and the lateral blade 180 from the tread 4 is reduced. The mold 104 can suppress occurrence of tread chipping and blade damage when releasing the tire 2. From this viewpoint, the difference (D1 - D7) is more preferably not less than 2.0 mm.

When the difference (D1 - D7) is set to be not greater than 6.5 mm, the lateral sipe 62 can function as an edge component until the final stage of wear in which replacement of the tire 2 becomes necessary. The tire 2 can maintain good wet performance from the new state until replacement of the tire 2 becomes necessary. From this viewpoint, the difference (D1 - D7) is more preferably not greater than 5.5 mm.

As shown in FIG. 15, the projection length D7 of the center portion 182 of the lateral blade 180 is longer than the projection length D3 from the reference surface BL to the position PXm at which the bulge portion 154 has the maximum width W2. As described above, the projection length D7 of the center portion 182 of the lateral blade 180 is shorter than the projection length D1 of the narrow groove projection 144. Accordingly, after the bulge portion 154 disappears to the position PXm at which the bulge portion 154 has the maximum width W2, the lateral sipe 62 can effectively function as an edge component until the final stage of wear in which replacement of the tire 2 becomes necessary. The tire 2 can maintain good wet performance from the new state until replacement of the tire 2 becomes necessary. From this viewpoint, it is preferable that the projection length D7 of the lateral blade 180 at the center portion 182 of the lateral blade 180 is longer than the projection length D3 from the reference surface BL to the position PXm at which the bulge portion 154 has the maximum width W2 and is shorter than the projection length D1 of the narrow groove projection 144. In other words, it is preferable that the distal end 182T of the center portion 182 is located between the position PXm at which the bulge portion 154 has the maximum width W2 and the distal end PHT of the narrow groove projection 144 in the radial direction.

In FIG. 15, a length indicated by a double-headed arrow W3 is the width in the axial direction of the lateral blade 180. The distance between one narrow groove projection 144 to another narrow groove projection 144 is the largest between the plate-like portion 158 of the one narrow groove projection 144 and the plate-like portion 158 of the other narrow groove projection 144. The width W3 in the axial direction of the lateral blade 180 extending between the two narrow groove projections 144 is represented as the distance in the axial direction between one plate-like portion 158 and the other plate-like portion 158.

A length indicated by a double-headed arrow W4 is the width in the axial direction of the center portion 182 of the lateral blade 180. The width W4 in the axial direction of the center portion 182 is represented as the distance in the axial direction from the end of the center portion 182 on one narrow groove projection 144 side to the end of the center portion 182 on the other narrow groove projection 144 side.

The ratio W4/W3 of the width W4 in the axial direction of the center portion 182 to the width W3 of the lateral blade 180 is preferably not less than 0.4 and not greater than 0.7.

When the ratio W4/W3 is set to be not less than 0.4, the lateral sipe 62 formed by only the center portion 182 and exposed after the lateral sipe 62 formed by the center portion 182 and the end portions 184 disappears, can function as an edge component until the final stage of wear in which replacement of the tire 2 becomes necessary. The tire 2 can maintain good wet performance from the new state until replacement of the tire 2 becomes necessary. From this viewpoint, the ratio W4/W3 is more preferably not less than 0.5.

When the ratio W4/W3 is set to be not greater than 0.7, the rubber is inhibited from getting caught at the projection-blade connection portion when pulling the narrow groove projection 144 and the lateral blade 180 from the tread 4. The mold 104 can reduce stress concentration occurring in the vicinity of the connection portion. The mold 104 can suppress occurrence of tread chipping and blade damage when releasing the tire 2. From this viewpoint, the ratio W4/W3 is more preferably not greater than 0.6.

As shown in FIG. 15, the boundary between each end portion 184 and the center portion 182 is rounded. In FIG. 15, each arrow R4 indicates the radius of the rounded boundary.

When the boundary between each end portion 184 and the center portion 182 is rounded, concentration of strain on the boundary is reduced. The rubber is inhibited from getting caught at this boundary portion when pulling the lateral blade 180 from the tread 4, so that the resistance force when pulling the lateral blade 180 from the tread 4 is reduced. The mold 104 can reduce stress concentration occurring in the vicinity of the projection-blade connection portion. The mold 104 can suppress occurrence of tread chipping and blade damage when releasing the tire 2. From this viewpoint, it is preferable that the boundary between each end portion 184 and the center portion 182 is rounded. In this case, the radius R4 of the rounded boundary is preferably not less than 0.5 mm and not greater than 5.0 mm.

As shown in FIG. 15, the center portion 182 has corner portions, and the corner portions are rounded. In FIG. 15, each arrow R5 indicates the radius of the rounded corner portion.

When the corner portions of the center portion 182 are rounded, concentration of strain on the corner portions is reduced. The rubber is inhibited from getting caught at the corner portions when pulling the lateral blade 180 from the tread 4, so that the resistance force when pulling the lateral blade 180 from the tread 4 is reduced. The mold 104 can reduce stress concentration occurring in the vicinity of the projection-blade connection portion. The mold 104 can suppress occurrence of tread chipping and blade damage when releasing the tire 2. From this viewpoint, it is preferable that the corner portions of the center portion 182 are rounded. In this case, the radius R5 of each rounded corner portion is preferably not less than 0.5 mm and not greater than 5.0 mm.

As is obvious from the above description, according to the present invention, a tire mold and a production method for a heavy duty tire that can suppress occurrence of tread chipping and blade damage when releasing the tire 2 and that can contribute to stable production of the tire 2 having the circumferential narrow grooves 18 and the lateral sipes 62 that can contribute to reducing rolling resistance and suppressing a decrease in wet performance due to wear, are obtained.

The above-described technology capable of suppressing occurrence of tread chipping and blade damage when releasing a tire and contributing to stable production of a tire having a circumferential narrow groove and a lateral sipe that can contribute to reducing rolling resistance and suppressing a decrease in wet performance due to wear, can be applied to various tire molds and production methods for a tire.

## Claims

1. A tire mold (104) for forming a heavy duty tire (2) including a tread (4) having a tread pattern, the tread pattern including a circumferential narrow groove (18) and a lateral sipe (62) connected to the circumferential narrow groove (18), the circumferential narrow groove (18) including a body portion (54) and a wide portion (56) located radially inward of the body portion (54), the body portion (54) including a narrow groove portion (60) connected to the wide portion (56), a pair of wall surfaces (18S) of the circumferential narrow groove (18) coming into contact with each other at the narrow groove portion (60) when the tread (4) comes into contact with a road surface and becomes deformed, the tire mold (104) comprising

a tread ring (114) for forming the tread (4), wherein
the tread ring (114) includes a pattern forming portion (136) for forming the tread pattern,
the pattern forming portion (136) includes a narrow groove projection (144) that projects from a reference surface (BL) thereof and is for forming the circumferential narrow groove (18), and a lateral blade (150, 180) that projects from the reference surface (BL) and is for forming the lateral sipe (62),

the narrow groove projection (144) includes a base portion (152) for forming the body portion (54) and a bulge portion (154) for forming the wide portion (56),

the base portion (152) includes a plate-like portion (158) for forming the narrow groove portion (60),

the tread ring (114) includes a plurality of division surfaces (124, 124m) traversing the pattern forming portion (136),

the plurality of division surfaces (124, 124m) divide the tread ring (114) into a plurality of segments (120) aligned in a circumferential direction, and

the number of the segments (120) included in the tread ring (114) is not less than 17.

2. The tire mold (104) according to claim 1, wherein

in a contour of a cross-section of the narrow groove projection (144) taken along a plane perpendicular to a length direction of the narrow groove projection (144), a portion transitioning from the plate-like portion (158) to the bulge portion (154) is an inner transition portion (162), and the inner transition portion (162) is represented by an arc having a radius R1,

a minimum width W1 of the plate-like portion (158) is narrower than a maximum width W2 of the bulge portion (154), and

the radius R1 of the arc representing the inner transition portion (162) is larger than half the maximum width W2 of the bulge portion (154).

3. The tire mold (104) according to claim 2, wherein

the body portion (54) of the circumferential narrow groove (18) includes a funnel portion (58) located radially outward of the narrow groove portion (60),

the base portion (152) includes a tapered portion (156) for forming the funnel portion (58),

in the contour of the cross-section of the narrow groove projection (144), a portion transitioning from the plate-like portion (158) to the tapered portion (156) is an outer transition portion (164), and the outer transition portion (164) is represented by an arc having a radius R2, and

a ratio R1/R2 of the radius R1 of the arc representing the inner transition portion (162) to the radius R2 of the arc representing the outer transition portion (164) is not less than 1.5.

4. The tire mold (104) according to claim 2 or 3, wherein a shortest distance from the lateral blade (150) closest to the division surface (124, 124m) to the division surface (124, 124m) is smaller than the radius R1 of the arc representing the inner transition portion (162).

5. The tire mold (104) according to any one of claims 1 to 4, wherein a ratio W1/W2 of a minimum width W1 of the plate-like portion (158) to a maximum width W2 of the bulge portion (154) is not less than 0.10 and not greater than 0.35.

6. The tire mold (104) according to any one of claims 1 to 5, wherein a minimum width W1 of the plate-like portion (158) is not greater than 2.5 mm.

7. The tire mold (104) according to any one of claims 1 to 6, wherein a ratio D2/D1 of a projection length D2 of the base portion (152) to a projection length D1 of the narrow groove projection (144) is not less than 0.25 and not greater than 0.70.

8. The tire mold (104) according to any one of claims 1 to 7, wherein a projection length D2 of the base portion (152), a projection length D3 from the reference surface (BL) to a position at which the bulge portion (154) has a maximum width W2, and a projection length D5 of the lateral blade (150) satisfy the following formula,

$$\text{formula: } D2 \leq D5 \leq D3.$$

9. The tire mold (104) according to any one of claims 1 to 8, wherein an angle ($\beta$) of the lateral blade (150) with respect to an axial direction is not less than -35 degrees and not greater than 35 degrees.

10. The tire mold (104) according to any one of claims 1 to 9, wherein the lateral blade (150, 180) extends in a zigzag manner in a projection direction and a length direction thereof.

11. The tire mold (104) according to any one of claims 1 to 10, wherein a thickness (TB) of the lateral blade (150) is not less than 0.4 mm and not greater than 0.7 mm.

12. The tire mold (104) according to any one of claims 1 to 11, wherein, in a development view of the pattern forming portion (136), contours of the division surfaces (124, 124m) each include at least one arc.

13. The tire mold (104) according to any one of claims 1 to 12, wherein a projection length D6 of the lateral blade (180) at an end portion (184) of the lateral blade (180) is shorter than a projection length D7 of the lateral blade (180) at a center portion (184) of the lateral blade (180).

**14.** The tire mold (104) according to claim 13, wherein a projection length D2 of the base portion (152), a projection length D3 from the reference surface (BL) to a position at which the bulge portion (154) has a maximum width W2, and the projection length D6 of the lateral blade (180) at the end portion (184) of the lateral blade (180) satisfy the following formula,

$$\text{formula: } D2 \leq D6 \leq D3.$$

**15.** A production method for a heavy duty tire (2) including a tread (4) having a tread pattern, the tread pattern including a circumferential narrow groove (18) and a lateral sipe (62) connected to the circumferential narrow groove (18), the circumferential narrow groove (18) including a body portion (54) and a wide portion (56) located radially inward of the body portion (54), the body portion (54) including a narrow groove portion (60) connected to the wide portion (56), a pair of wall surfaces (18S) of the circumferential narrow groove (18) coming into contact with each other at the narrow groove portion (60) when the tread (4) comes into contact with a road surface and becomes deformed, the production method comprising

a step of pressuring and heating a green tire (2r) for the tire (2) in a mold, wherein the mold is the tire mold (104) according to any one of claims 1 to 14.

Fig. 1

Fig. 2

Fig. 3

Fig. 4

Fig. 5

32  62  62M

62T

RD1
↑
RD
↓
RD2

Fig. 6

Fig. 7

Fig. 8

Fig. 9

EP 4 644 104 A1

34

Fig. 10

(120)
114

PBE

PBE

136

PBE

BL

150

RD1

RD

RD2

TB

PBT

Fig. 11

Fig. 12

Fig. 13

Fig. 14

Fig. 15

| | Europäisches Patentamt European Patent Office Office européen des brevets | **EUROPEAN SEARCH REPORT** | **Application Number** EP 25 16 1110 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| Y,D | JP 2017 094891 A (BRIDGESTONE CORP) 1 June 2017 (2017-06-01) * the whole document * ----- | 1-15 | INV. B29D30/06 B60C11/03 B60C11/12 |
| Y | US 2021/107245 A1 (HOSODA YASUHIRO [JP]) 15 April 2021 (2021-04-15) * paragraphs [0009], [0018], [0053], [0057]; claim 1 * ----- | 1-15 | |
| A | US 2009/159167 A1 (SCHEUREN DANIEL [BE]) 25 June 2009 (2009-06-25) * paragraphs [0030], [0031], [0033]; figures 1-9 * ----- | 1-15 | |

|  |
| --- |
| TECHNICAL FIELDS SEARCHED (IPC) |
| B29D B60C |

The present search report has been drawn up for all claims

| Place of search | Date of completion of the search | Examiner |
| --- | --- | --- |
| Munich | 5 August 2025 | Callan, Feargel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 1110

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2025

| Patent document cited in search report | Publication date | Patent family member(s) | | Publication date |
|---|---|---|---|---|
| JP 2017094891 A | 01-06-2017 | CN | 108290462 A | 17-07-2018 |
| | | EP | 3381718 A1 | 03-10-2018 |
| | | JP | 6621312 B2 | 18-12-2019 |
| | | JP | 2017094891 A | 01-06-2017 |
| | | US | 2018345733 A1 | 06-12-2018 |
| | | WO | 2017090332 A1 | 01-06-2017 |
| US 2021107245 A1 | 15-04-2021 | CN | 112659417 A | 16-04-2021 |
| | | EP | 3808550 A1 | 21-04-2021 |
| | | JP | 7419742 B2 | 23-01-2024 |
| | | JP | 2021062547 A | 22-04-2021 |
| | | US | 2021107245 A1 | 15-04-2021 |
| US 2009159167 A1 | 25-06-2009 | AU | 2008255193 A1 | 09-07-2009 |
| | | BR | PI0805635 A2 | 01-12-2009 |
| | | CN | 101462470 A | 24-06-2009 |
| | | EP | 2072286 A1 | 24-06-2009 |
| | | JP | 2009149297 A | 09-07-2009 |
| | | PL | 2072286 T3 | 31-05-2011 |
| | | US | 2009159167 A1 | 25-06-2009 |
| | | ZA | 200810574 B | 25-11-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017094891 A